(19) Europäisches Patentamt
European Patent Office
Office européen des brevets

(11) **EP 3 276 622 A1**

(12) **EUROPEAN PATENT APPLICATION**
published in accordance with Art. 153(4) EPC

(43) Date of publication:
**31.01.2018 Bulletin 2018/05**

(51) Int Cl.:
**G10L 25/51** (2013.01)  **G06Q 50/10** (2012.01)

(21) Application number: **16772151.3**

(86) International application number:
**PCT/JP2016/057392**

(22) Date of filing: **09.03.2016**

(87) International publication number:
**WO 2016/158267 (06.10.2016 Gazette 2016/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **27.03.2015 JP 2015066901**
**16.12.2015 PCT/JP2015/085187**

(71) Applicant: **Sony Corporation**
**Tokyo 108-0075 (JP)**

(72) Inventors:
• **MOCHIZUKI, Keita**
**Tokyo 108-0075 (JP)**
• **FUKUMOTO, Yasutaka**
**Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE, INFORMATION PROCESSING METHOD, AND PROGRAM**

(57)    There is provided an information processing device including: a communication determination unit configured to determine, on the basis of a feature value extracted from speech data including at least a sound of speech of a user, whether communication occurs between users including the user, the feature value indicating an interaction between the users.

**FIG. 10**

**Description**

Technical Field

The present disclosure relates to an information processing device, an information processing method, and a program.

Background Art

Detecting communication such as conversations occurring between users is useful, for example, to guess the relationship between the users. As technology therefor, for example, Patent Literature 1 proposes the technology of extracting a conversation group on the basis of the similarity between speech feature values such as frequency components extracted from the sound information transmitted from the terminal devices of respective users. This makes it possible to analyze conversations irregularly occurring between unspecified people.

Citation List

Patent Literature

Patent Literature 1: JP 2012-155374A

Disclosure of Invention

Technical Problem

However, it is not necessarily easy for the technology, for example, as described in Patent Literature 1 to detect a short conversation between users or detect that a conversation begins in real time in order to detect a conversation on the basis of aggregated speech feature values such as frequency components. Further, for example, in a case where there are a large number of users that can be candidates for conversation groups or users are found in noisy environments, it can be difficult to robustly detect conversations.

The present disclosure then proposes a novel and improved information processing device, information processing method, and program that uses feature values extracted from speech data and makes it possible to more robustly detect conversations between users in a variety of phases.

Solution to Problem

According to the present disclosure, there is provided an information processing device including: a communication determination unit configured to determine, on the basis of a feature value extracted from speech data including at least a sound of speech of a user, whether communication occurs between users including the user, the feature value indicating an interaction between the users.

Further, according to the present disclosure, there is provided an information processing method including, by a processor: determining, on the basis of a feature value extracted from speech data including at least a sound of speech of a user, whether communication occurs between users including the user, the feature value indicating an interaction between the users.

Further, according to the present disclosure, there is provided a program for causing a computer to execute: a function of determining, on the basis of a feature value extracted from speech data including at least a sound of speech of a user, whether communication occurs between users including the user, the feature value indicating an interaction between the users.

Advantageous Effects of Invention

As described above, according to the present disclosure, it is possible to use feature values extracted from speech data and more robustly detect conversations between users in a variety of phases.

Note that the effects described above are not necessarily limitative. With or in the place of the above effects, there may be achieved any one of the effects described in this specification or other effects that may be grasped from this specification.

Brief Description of Drawings

[FIG. 1] FIG. 1 is a diagram for schematically describing detection of a conversation in a first embodiment of the present disclosure.

[FIG. 2] FIG. 2 is a diagram illustrating a configuration example of a system according to the first embodiment of the present disclosure.

[FIG. 3] FIG. 3 is a diagram illustrating a functional component example of the system according to the first embodiment of the present disclosure.

[FIG. 4] FIG. 4 is a diagram for describing detection of an action in the first embodiment of the present disclosure.

[FIG. 5] FIG. 5 is a diagram for describing determination about whether a conversation occurs in the first embodiment of the present disclosure.

[FIG. 6] FIG. 6 is a diagram illustrating an example in which a state of a conversation occurring between users is expressed in a chronological order in the first embodiment of the present disclosure.

[FIG. 7] FIG. 7 is a diagram illustrating an example in which a state of a conversation occurring between users is expressed in a chronological order in the first embodiment of the present disclosure.

[FIG. 8] FIG. 8 is a diagram illustrating an example in which a state of a conversation occurring between users is expressed in a chronological order in the first embodiment of the present disclosure.

[FIG. 9] FIG. 9 is a diagram for describing optimization of a conversation graph structure in the first embodiment of the present disclosure.

[FIG. 10] FIG. 10 is a diagram for describing extension of a feature value in the first embodiment of the present disclosure.

[FIG. 11] FIG. 11 is a diagram for describing a use example of information obtained from detection of a conversation in the first embodiment of the present disclosure.

[FIG. 12] FIG. 12 is a diagram for describing a first use example of information obtained from detection of a conversation in the first embodiment of the present disclosure.

[FIG. 13] FIG. 13 is a diagram for describing the first use example of information obtained from detection of a conversation in the first embodiment of the present disclosure.

[FIG. 14] FIG. 14 is a diagram for describing the first use example of information obtained from detection of a conversation in the first embodiment of the present disclosure.

[FIG. 15] FIG. 15 is a diagram for describing a second use example of information obtained from detection of a conversation in the first embodiment of the present disclosure.

[FIG. 16] FIG. 16 is a diagram for describing the second use example of information obtained from detection of a conversation in the first embodiment of the present disclosure.

[FIG. 17] FIG. 17 is a diagram for describing a third use example of information obtained from detection of a conversation in the first embodiment of the present disclosure.

[FIG. 18] FIG. 18 is a diagram for describing a sixth use example of information obtained from detection of a conversation in the first embodiment of the present disclosure.

[FIG. 19] FIG. 19 is a diagram for describing the sixth use example of information obtained from detection of a conversation in the first embodiment of the present disclosure.

[FIG. 20] FIG. 20 is a diagram for schematically describing a transfer of a GNSS positioning right in a second embodiment of the present disclosure.

[FIG. 21] FIG. 21 is a diagram describing a use example of a GNSS positioning right in the second embodiment of the present disclosure.

[FIG. 22] FIG. 22 is a block diagram illustrating a system configuration according to the second embodiment of the present disclosure.

[FIG. 23] FIG. 23 is a block diagram illustrating another system configuration according to the second embodiment of the present disclosure.

[FIG. 24] FIG. 24 is a block diagram illustrating another system configuration according to the second embodiment of the present disclosure.

[FIG. 25] FIG. 25 is a flowchart illustrating an operation according to an application example of the second embodiment of the present disclosure.

[FIG. 26] FIG. 26 is a block diagram illustrating a hardware configuration example of an information processing device according to an embodiment of the present disclosure.

Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Hereinafter, the description will be made in the following order.

1. First Embodiment
1-1. Overview and System Configuration
1-2. Example of Processing for Detecting Conversation
1-3. Applied Information Generation Example
1-4. Supplemental Information on First Embodiment
2. Second Embodiment
2-1. Overview and System Configuration
2-2. Application Example
2-3. Supplemental Information on Second Embodiment
3. Hardware Configuration

<1. First Embodiment>

(1-1. Overview and System Configuration)

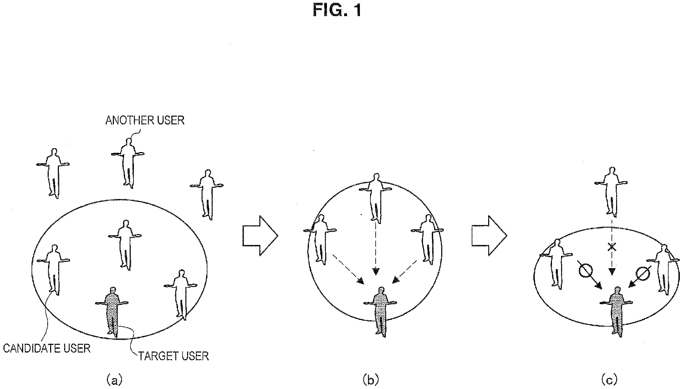

FIG. 1 is a diagram for schematically describing detection of a conversation in an embodiment of the present disclosure. FIG. 1 illustrates processes of specifying users having conversations from among users in the present embodiment in (a) to (c). First, as illustrated in (a), users other than a target user are divided into candidate users and other users to determine whether conversations with the target user occur. The candidate users are indicated, for example, through GNSS positioning, Wi-Fi positioning, or the like as users positioned near the target user. If the other users or users who are hardly estimated to have conversations because of a physical constraint are removed from targets of the following detection processing, it is possible to reduce the processing amount and improve the accuracy of detection.

Next, as illustrated in (b), sensor data is acquired for both the target user and the candidate users. More specifically, the sensor data includes sensor data such as speech data acquired by microphones (sound sensors), and acceleration indicating motions of users. As illustrated in (c), it is determined whether conversations occur between the target user and the candidate users, on the basis of feature values that are extracted from these kinds of sensor data and indicate interactions between the users. The target user can be categorized into a common conversation group along with candidate users determined to have the conversations.

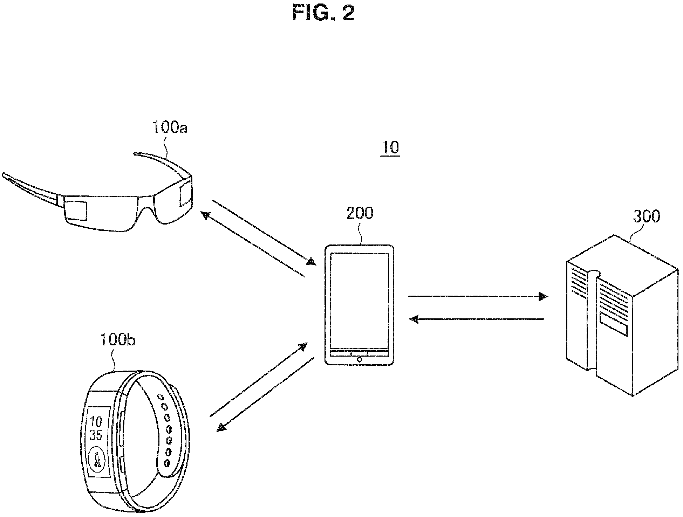

FIG. 2 is a diagram illustrating a schematic configuration example of a system according an embodiment of the present disclosure. FIG. 2 illustrates that a system 10 includes a wearable terminal 100 (eyewear 100a and wristwear 100b), a mobile terminal 200, and a server 300. Devices included in the system 10 can be implemented, for example, by the hardware configuration of an information processing device described below.

The wearable terminal 100 is worn by each user. The wearable terminal 100 includes, for example, a microphone (sound sensor), and acquires speech data including a sound of speech of the user. Further, the wearable terminal 100 may include other sensors such as an acceleration sensor and a gyro sensor, and acquire sensor data such as acceleration indicating a motion of the user. For example, the eyewear 100a can be capable of acquiring sensor data indicating the acceleration or the angular velocity corresponding to a nod of a user. Further, for example, the wristwear 100b can be capable of acquiring sensor data indicating the acceleration or the angular velocity corresponding to a movement of a user's hand, a biological indicator such as a pulse, or the like. Further, the wearable terminal 100 may use information generated through information processing according to the present embodiment described below for presentation to a user. More specifically, the wearable terminal 100 may include output devices such as a display and a speaker, and present information to a user from these output devices in the form of images and sounds. Additionally, although the wearable terminal 100 and the mobile terminal 200 are separately shown in the illustrated example, the function of the wearable terminal 100 may be included in the mobile terminal 200 in another example. In this case, the mobile terminal 200 acquires sensor data by using a microphone, an acceleration sensor, a gyro sensor, or the like, and presents information generated through information processing to a user.

The mobile terminal 200 is carried by each user. The mobile terminal 200 relays communication between the wearable terminal 100 and the server 300 in the illustrated example. More specifically, for example, the wearable terminal 100 communicates with the mobile terminal 200 as wireless communication such as Bluetooth (registered trademark), while the mobile terminal 200 communicates with the server 300 as network communication such as the Internet. Here, the mobile terminal 200 may process information received from the wearable terminal 100 as necessary, and then transmit the processed information to the server 300. For example, the mobile terminal 200 may analyze sensor data including speech data received from the wearable terminal 100, and extract an intermediate feature value. Alternatively, the mobile terminal 200 may transfer sensor data received from the wearable terminal 100 to the server 300 with no processing. In such a case, for example, the system 10 does not necessarily have to include the mobile terminal 200 as long as network communication is possible between the wearable terminal 100 and the server 300. Further, the mobile terminal 200 may use information generated through information processing according to the present embodiment described below for presentation to a user instead of or in combination with the wearable terminal 100.

The server 300 is implemented by one or more information processing devices on a network, and provides a service to each user. For example, the server 300 extracts feature values from sensor data collected from the wearable terminal 100 of each user via the mobile terminal 200, and determines on the basis of the feature values whether a conversation occurs between users. The server 300 may generate information expressing the situation in which a conversation occurs between users, for example, on the basis of a result of the determination. This information may be used to display a screen for allowing, for example, a user (who can be a user not participating in a conversation or a user whose conversation is not a target of detection) to grasp, in real time, the situation in which a conversation occurs, or accumulated as a log. The information accumulated as a log may be, for example, referred to the above-described user afterwards, or a graph structure that expresses the relationship between users may be specified on the basis of the information accumulated as a log. Additionally, these kinds of processing may be executed, for example, by the mobile terminal 200 serving as a host between the wearable terminal 100 and the mobile terminal 200 of each user. In this case, the system 10 does not necessarily have to include the server 300.

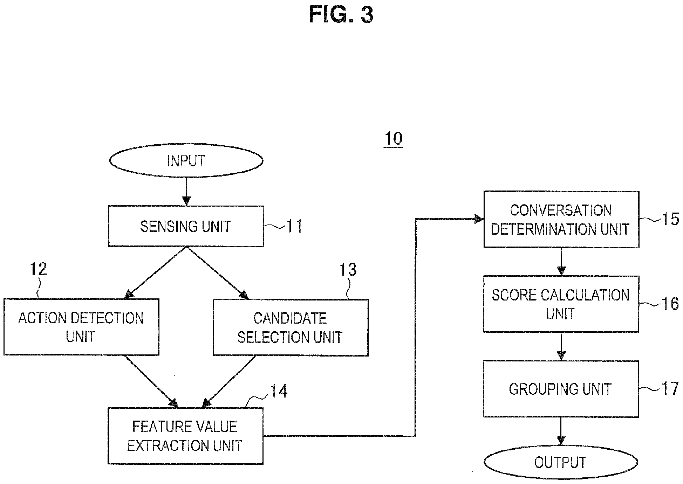

FIG. 3 is a diagram illustrating a functional component example of a system according an embodiment of the present disclosure. FIG. 3 illustrates that the system 10 includes a sensing unit 11, an action detection unit 12, a candidate selection unit 13, a feature value extraction unit 14, a conversation determination unit 15, a score calculation unit 16, and a grouping unit 17 as functional components. Additionally, the sensing unit 11 is implemented by a sensor such as the microphone (sound sensor), the acceleration sensor, and/or the gyro sensor included in the wearable terminal 100 described above with reference to FIG. 2. The action detection unit 12, the candidate selection unit 13, the feature value extraction unit 14, the conversation determination unit 15, the score calculation unit 16, and the grouping unit 17 are implemented in the server 300, the mobile terminal 200, and/or the server 300 by a processor such as a CPU operating in accordance with a program. That is, the functional components implemented by the above-described processor may be integrated and implemented by any of the information processing devices included in the system 10, or distributed and implemented by information processing devices. Each functional component will be further described below.

The sensing unit 11 includes a sensor such as a microphone (sound sensor) that acquires speech data as an input into the system 10, an acceleration sensor or a gyro sensor that acquires sensor data such as acceleration indicating a motion of a user as an input into the system 10. Moreover, the sensing unit 11 includes a GNSS receiver or a wireless communication device for Wi-Fi or the like that acquires positional information of a user. The sensing unit 11 is implemented in the wearable terminal 100 such as the eyewear 100a and the wristwear 100b as illustrated, for example, in FIG. 2. However, in a case where the function of the wearable terminal 100 is included in the mobile terminal 200 as described above, the sensing unit 11 is implemented in the mobile terminal 200.

The action detection unit 12 detects, from sensor data (that can include speech data) acquired by the sensing unit 11, an action of each user that provides sensor data. More specifically, for example, the action detection unit 12 detects a user's speech action from speech data. Here, the action detection unit 12 does not necessarily have to detect a feature of voice in speech or a speech content in the present embodiment. That is, the action detection unit 12 may simply detect whether a user speaks at certain time. In a case where the action detection unit 12 can additionally detect a feature of voice, a speech content, or the like, the action detection unit 12 may also detect them. Further, for example, the action detection unit 12 detects an action such as a nod of a user or a movement (gesture) of a user's hand from sensor data of acceleration or angular velocity. Moreover, for example, the action detection unit 12 may also detect a psychological action of a user from sensor data of a biological indicator such as the pulse of the user.

The candidate selection unit 13 detects the positional relationship between users who each provide sensor data, from sensor data acquired by the sensing unit 11, and selects users whose positional relationship satisfies a predetermined condition as candidates for users included in a conversation group. More specifically, the candidate selection unit 13 selects, as a candidate user, another user who is positioned near a target user, which is indicated through GNSS positioning, Wi-Fi positioning, or the like. Additionally, positional information of each user does not necessarily have to be available for the candidate selection unit 13 to select a candidate user. For example, if a terminal device (such as the wearable terminal 100 or the mobile terminal 200) of each user is directly communicable through wireless communication such as Bluetooth (registered trademark), the candidate selection unit 13 may recognize that these users are approaching. Alternatively, the candidate selection unit 13 may select a candidate user on the basis of behavior information of each user. More specifically, for example, the candidate selection unit 13 may acquire a user's behavior recognition result (such as work or a meeting in the office) associated with a position, and select another user whose behavior recognition result common to that of a target user is acquired as a candidate user. Further, for example, the candidate selection unit 13 may acquire a user's schedule (such as work or a meeting in the office similarly to a behavior recognition result) associated with a position, and select another user whose schedule common to that of a target user is acquired as a candidate user.

The feature value extraction unit 14 extracts the mutual relationship of actions detected by the action detection unit 12 between each candidate user extracted by the candidate selection unit 13 and the target user: a feature value indicating an interaction. Such a feature value is extracted on the basis of the temporal relationship between actions in the present embodiment.

For example, the feature value extraction unit 14 extracts, from speech data including a sound of speech of a user, a feature value indicating an interaction between users including the user. More specifically, the users include a first user and a second user, and the feature value extraction unit 14 extracts a feature value on the basis of the temporal relationship between a sound of speech of the first user (who can be a target user) and a sound of speech of the second user (who can be a candidate user). This feature can indicate that the first user exchanges speech with the second user. For example, in a case where the first user converses with the second user, it is unlikely that speech sections of the first user overlap much with speech sections of the second user. The speech sections of the respective users should alternately occur.

Additionally, speech data acquired by the sensing unit 11 may separately include first speech data including a sound of speech of the first user, and second speech data including a sound of speech of the second user in the above-described example. Alternatively, speech data acquired by the sensing unit 11 may include a single piece of speech data including a sound of speech of the first user and a sound of speech of the second user (a sound of speech of still another user may be included in the single piece of speech data or different speech data). Additionally, in a case a single piece of speech data includes sounds of speech of users, processing of separating the sounds of speech of the respective users can be executed, for example, on the basis of a speaker recognition result or the like.

Further, for example, the feature value extraction unit 14 may extract a feature value between the first user and the second user on the basis of the temporal relationship between a sound of speech of each user included in the speech data provided from the user, and a motion or a biological indicator indicated by the sensor data provided from each user in the same way. That is, for example, the feature value extraction unit 14 may extract a feature value on the basis of the relationship between a sound of speech of the first user included in the speech data provided from the first user, and a motion or a biological indicator indicated by the sensor data provided from the second user. Further, the feature value extraction unit 14 may not only extract a feature value between a target user and a candidate user, but also extract a feature value between candidate users.

The conversation determination unit 15 determines on the basis of a feature value extracted by the feature value extraction unit 14 whether a conversation occurs between users. Since the candidate selection unit 13 is included in the present embodiment, the conversation determination unit 15 determines whether a conversation occurs between users selected on the basis of the positional relationship between users (all the users who are processing targets) from the users. As already described for the candidate selection unit 13, users who are determination targets may be selected on the basis of behavior information of each user. More specifically, for example, in a case where the occurrence probability of conversations calculated on the basis of a feature value extracted between the first user and the second user exceeds a predetermined threshold, the conversation determination unit 15 determines that a conversation occurs between the first user and the second user. The conversation determination unit 15 can specify a candidate user who has a conversation with a target user by calculating occurrence probability on the basis of a feature value extracted by the feature value extraction unit 14 between the target user and the candidate user. Moreover, the conversation determination unit 15 can specify a conversation that occurs between candidate users by calculating occurrence probability on the basis of a feature value extracted by the feature value extraction unit 14 between candidate users. Specifying conversations occurring not only between a target user and a candidate user, but also between candidate users make it is possible to grasp the situation of conversations occurring around the target user.

The score calculation unit 16 calculates a score between users on the basis of a conversation occurrence history based on the determination of the conversation determination unit 15. For example, the score calculation unit 16 may calculate a score by integrating times for which conversations are occurring between users within a predetermined period of time. Alternatively, the score calculation unit 16 may calculate a score on the basis of the frequency of occurrence of conversations occurring between users for a predetermined time or more within a predetermined period of time. Further, for example, in a case where it is determined that a conversation occurs between users, the score calculation unit 16 may refer to the occurrence probability of conversations calculated by the conversation determination unit 15, and calculate a higher score between users who are determined to have conversations with a higher occurrence probability. Moreover, for example, in a case where the action detection unit 12 can detect a feature of a user's voice, a speech content, and the like, the score calculation unit 16 may estimate the degree to which a conversation is active, on the basis of them, and calculate a higher score between users having a more active conversation.

The grouping unit 17 groups users on the basis of a score calculated by the score calculation unit 16. There can be a variety of grouping expressions. For example, the grouping unit 17 categorizes users whose mutual scores exceed a threshold into a common group. Further, the grouping unit 17 may specify a graph structure expressing the relationship between users. The graph structure may be defined separately from a group, or a group may be defined in accordance with the presence or absence, or the strength of a link of the graph structure. Additionally, information based on a determination result of the conversation determination unit 15 in the present embodiment may be generated not only by the grouping unit 17, but may be generated in a variety of forms. Such another example will be described below.

(1-2. Example of Processing for Detecting Conversation)

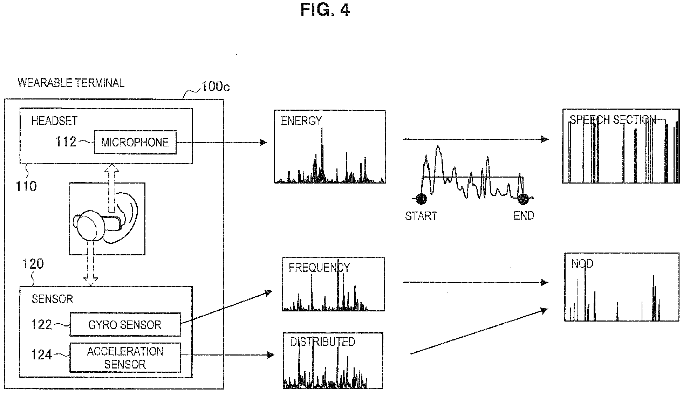

FIG. 4 is a diagram for describing detection of an action in an embodiment of the present disclosure. The wearable terminal 100c includes a headset 110 and a motion sensor 120 for detecting a nod of a user in the example illustrated in FIG. 4. The headset 110 includes a microphone 112, and acquires speech data. The motion sensor 120 includes a gyro sensor 122 and an acceleration sensor 124, and acquires sensor data of angular velocity and acceleration. Here, the above-described action detection unit 12 in the system 10 uses it as a start condition that energy subjected speech data extraction exceeds a threshold, and uses it as an end condition that the energy stays below the threshold for a predetermined time or more. The action detection unit 12 can then hereby detect a speech section of a user. Meanwhile, the action detection unit 12 can detect a section in which a nod of a user occurs by removing a section in which acceleration is distributed much from a section in which the predetermined frequency of angular velocity is large.

Next, the extraction of feature values in an embodiment of the present disclosure will be described. The feature value extraction unit 14 in the system 10 calculates a feature value indicating an interaction between the first user and the second user in the present embodiment. The feature value extraction unit 14 extracts a positive feature value for an interaction between users, for example, on the basis of the following events. That is, in a case where the following events frequently occur, feature values indicating interactions between users can be higher.

- Exchange of speech (the speech of the first user and the speech of the second user alternately occur)
- Nod of a non-speaker during speech
- Nod of a non-speaker within a short speech period of time
- Concurrent nods of a speaker and a non-speaker
- Speech during speech of a speaker + a response of a nod

Meanwhile, the feature value extraction unit 14 calculates a negative feature value for an interaction between users, for example, on the basis of the following events. That is, in a case where the following events frequently occur, feature values indicating interactions between users can be lower. - Coincidence of speech sections (the speech of the first user and the speech of the second user concurrently occur)

- No reaction of a non-speaker to speech

For example, the feature value extraction unit 14 calculates feature values based on the above-described events in a predetermined cycle (100 Hz as an example). The conversation determination unit 15 inputs the calculated feature values into a determination device in a predetermined cycle (which may be longer than the cycle for calculating the feature values, and 0.2 Hz as an example. In this case, the feature values may be treated as an average for every 30 s). The determination device may be, for example, a binary determination device, and determines whether the first user is likely or unlikely to converse with the second user. Such a determination device is generated, for example, through machine learning. For example, a support vector machine (SVM) can be used as a technique of machine learning, but a variety of known techniques in addition to this example can also be used. Further, any determination device can be used in the present embodiment as long as an output thereof enables the following determination. More specifically, the determination device may be a binary determination device, or a determination device that outputs probability. Further, the determination device does not necessarily have to be generated through machine learning.

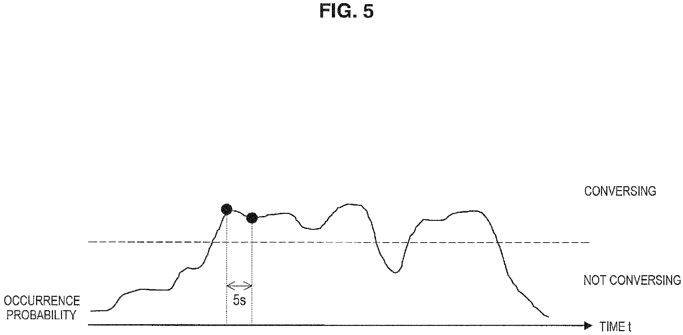

FIG. 5 is a diagram for describing determination about whether a conversation occurs in an embodiment of the present disclosure. The conversation determination unit 15 of the system 10 calculates occurrence probability in accordance with an output of the determination device, and determines on the basis of the occurrence probability whether a conversation occurs in the example illustrated in FIG. 5. More specifically, in a case where the above-described determination device is a binary determination device, the conversation determination unit 15 increases occurrence probability in a case where an output of the determination device is positive (a conversation is likely to occur), and decreases occurrence probability in a case where the output is negative (a conversation is unlikely to occur). Further, in a case where the above-described determination device outputs probability, the conversation determination unit 15 may vary the score of occurrence probability in accordance with the magnitude of the probability output from the determination device. The determination device makes an output at 0.2 Hz, and the occurrence probability is updated every 5 s in the illustrated example. The conversation determination unit 15 determines that a conversation occurs between users in a section in which the occurrence probability consecutively added/subtracted in this way exceeds a predetermined threshold.

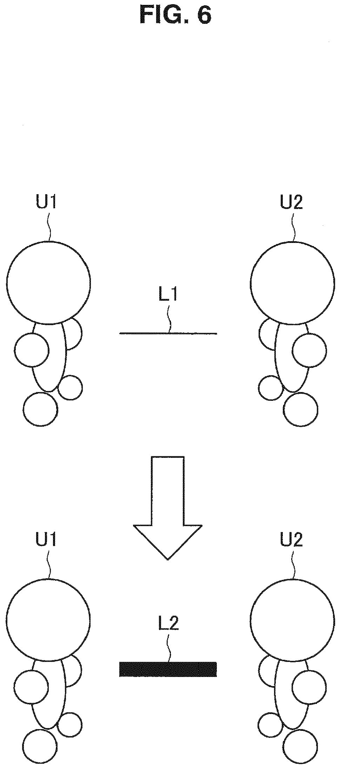

FIGS. 6 to 8 are diagrams each illustrating an example in which the state of a conversation occurring between users is expressed in a chronological order in an embodiment of the present disclosure. The states of conversations between users may be output in a chronological order on the basis of a conversation occurrence determination of the conversation determination unit 15, for example, as illustrated in FIG. 5 separately from statistical processing performed by the above-described score calculation unit 16 or grouping unit 17 in the present embodiment. The wearable terminal 100 or the mobile terminal 200 shown, for example, in the example of FIG. 1 may present such an output to a user involved in the conversations, a user of the system 10 who is not involved in the conversations, or another user who does not use the system 10, but has a viewing right. In this case, the processor of the wearable terminal 100, the mobile terminal 200, or the server 300 can implement a display control unit that displays a screen for presenting detected conversations in a chronological order.

FIG. 6 is an example in which the states of conversations occurring between two users are expressed. The occurrence states of conversations between a user U1 and a user U2 are represented by a link L1 and a link L2 in the illustrated example. The widths of the link L1 and the link L2 change in accordance with the occurrence probability of conversations between the user U1 and the user U2 which is calculated, for example, as shown in the example illustrated in FIG. 5. That is, the link L1 indicates that the occurrence probability of conversations between the user U1 and the user U2 is low in the illustrated example. For example, in a case where the occurrence probability of conversations is greater than 0, but does not reach a predetermined threshold, the width of the link L1 can be shown as the narrowest. Meanwhile, as the occurrence probability of conversations exceeds the threshold and increases, the link L2 having greater width can be shown.

As already described, the occurrence probability of conversations is used in determination using a threshold, for example, as illustrated in FIG. 5 to determine whether a conversation occurs in the present embodiment. Further, in a case where the occurrence probability of conversations is calculated on the basis of feature values as exemplified above, the higher occurrence probability of conversations can indicate that conversations are exchanged or non-speakers nod more frequently. It is thus possible to interpret the occurrence probability of conversations, for example, as a continuous value representing the activity of conversations, and use the occurrence probability of conversations to change the above-described display form.

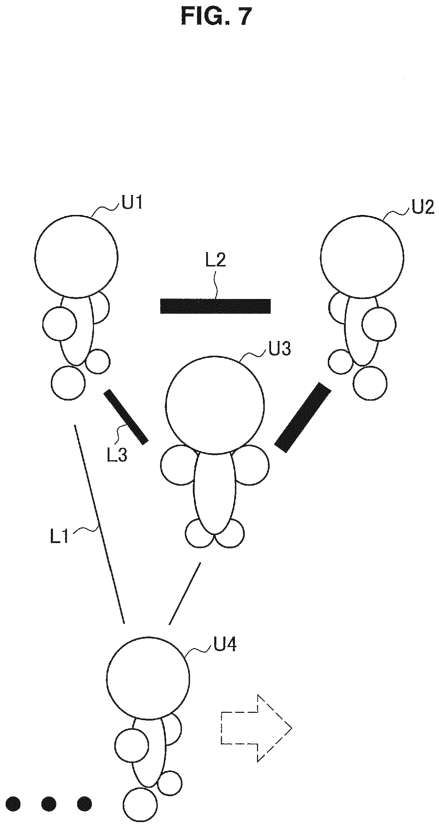

FIG. 7 is an example in which the states of conversations occurring among three users are expressed. As described above, feature values are extracted for a pair of users (first user and second user) included in users who are targets, and it is determined whether a conversation occurs, in accordance with the occurrence probability of conversations which is calculated further on the basis of the feature values in the present embodiment. In a case of three users, feature values are extracted and conversations are determined for the three respective pairs (= $_3C_2$). As results of such extraction and determination, the wide links L2 are displayed between the user U1 and the user U2, and between the user U2 and a user U3 in the example illustrated in FIG. 7. The links L2 show that conversations actively occur between these users similarly to the example illustrated in FIG. 6. Meanwhile, a link L3 having middle width is displayed between the user U3 and the user U1. The link L3 shows that conversations also occur between the user U3 and the user U1, but the conversations are not so active. It is guessed from these kinds of display that conversations among the three of the users U1 to U3 proceed with the user U2 serving as a hub.

Meanwhile, in a case where a user U4 who is not involved in the conversations passes by the users U1 to U3, the position of the user U4 approaches the users U1 to U3. Accordingly, the user U4 can be treated as a candidate user, but feature values that are extracted by the feature value extraction unit 14 and indicate interactions between users do not become positive for the occurrence of conversations as described above. Thus, the occurrence probability of conversations calculated by the conversation determination unit 15 is not also high. The occurrence probability of conversations does not therefore exceed the threshold, although the narrow links L1 can be displayed between the user U1 and the user U4, and between the user U3 and the user U4, for example, as illustrated. Accordingly, the displayed links do not have greater width. Once the user U4 goes further, the links L1 also disappear.

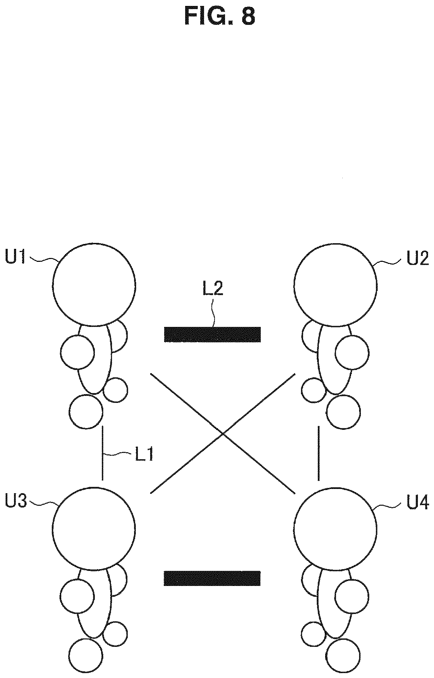

FIG. 8 is an example in which the states of conversations occurring among four users are expressed. Feature values are also extracted for a pair of users included in users who are targets, and it is determined whether a conversation occurs, in accordance with the occurrence probability of conversations which is calculated further on the basis of the feature values in this example. As results of such extraction and determination, the wide links L2 are displayed between the user U1 and the user U2, and between the user U3 and a user U4 in the example illustrated in FIG. 8. The links L2 show that conversations actively occur between these users similarly to the example that has already been described. Meanwhile, the narrow links L1 are displayed between the other combinations of the four users. Similarly to the examples that have already been described, the links L1 also show that conversations hardly occur between these users. It is guessed from these kinds of display that the users U1 to U4 gather in the same place to have conversations, but actually conversations proceed separately in the pair of the user U1 and the user U2 (subgroup) and the pair of the user U3 and the user U4 (subgroup).

For example, conversations are detected on the basis of feature values such as frequency components of speech data acquired by the wearable terminal 100 of each of the users U1 to U4, it is possible to categorize the users U1 to U4 into a single conversation group because the speech data provided from each of the users U1 to U4 can indicate similar feature values, but it is difficult to guess in what combinations of them the conversations proceed in the above-described example illustrated FIG. 8. In contrast, it is possible in the present embodiment to accurately specify combinations of users in which conversations actually occur because the feature value extraction unit 14 extracts feature values indicating interactions between the users.

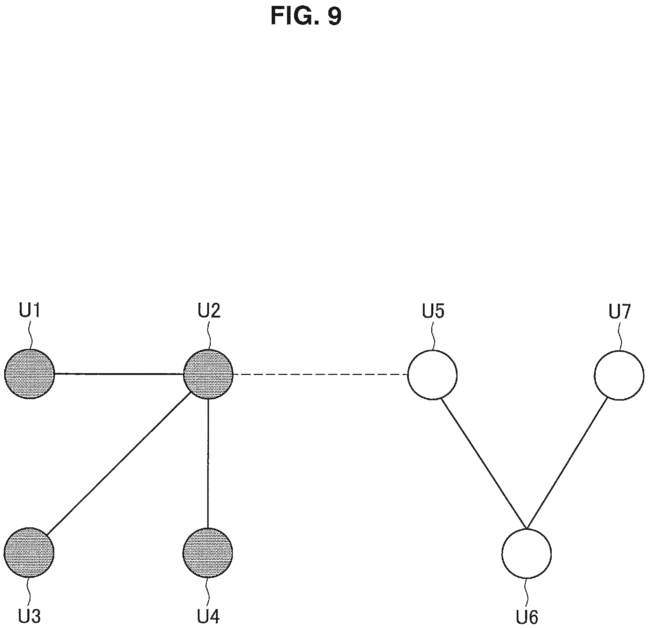

FIG. 9 is a diagram for describing the optimization of a conversation graph structure in an embodiment of the present disclosure. Categorizing users estimated to have conversations into a common conversation group, the conversation determination unit 15 of the system 10 optimizes a graph structure showing the occurrence situations of conversations between users in accordance with a rule set in advance for the graph structure in the example illustrated in FIG. 9. More specifically, a link between the user U2 and a user U5 is optimized and disconnected in the original graph structure including the users U1 to U7, and a conversation group including the users U1 to U4 is separated from a conversation group including the users U5 to U7 in the illustrated example.

For example, the conversation determination unit 15 minimizes the energy of the generated graph structure, thereby performing the above-described optimization (rule of minimizing energy). Further, the conversation determination unit 15 may also optimize the graph structure in accordance with a rule based on the common knowledge that it is a single person who serves as a hub of conversations, for example, like the user U2 in the example of FIG. 7. Further, for example, in optimizing the graph structure, the conversation determination unit 15 may use the speed of other users' reactions to a certain user's speech to determine whether to maintain links (a link between a speaker and a non-speaker who speedily reacts to the speech is easier to maintain). Further, for example, in a case where the wearable terminal 100 can detect the direction of each user's face, the conversation determination unit 15 may use the direction of each user's face to determine whether to maintain links (a link between a speaker and a person who is spoken to and turns his or her face to the speaker is easier to maintain).

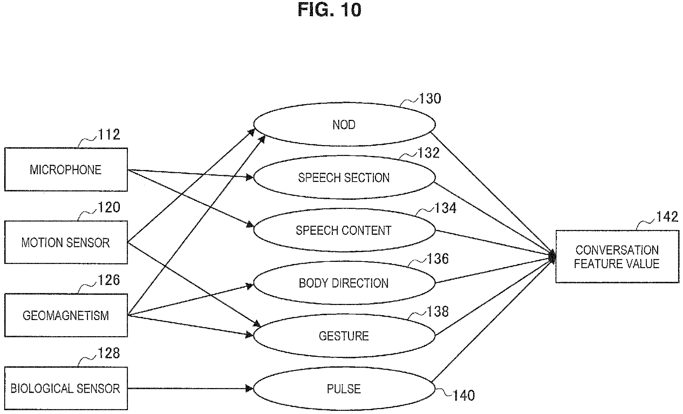

FIG. 10 is a diagram for describing the extension of a feature value in an embodiment of the present disclosure. Although the speech and nodding of users are used as an action for extracting feature values for detecting conversations between the users in the example described above, for example, with reference to FIG. 4, feature values may be extracted on the basis of further various actions as illustrated in FIG. 10 in another example. FIG. 10 exemplifies, as sensors that can be used to extract such feature values, a microphone 112, a motion sensor 120 (that can include the gyro sensor 122 and the acceleration sensor 124 exemplified in FIG. 4), a geomagnetic sensor 126, and a biological sensor 128. These sensors are included, for example, in the wearable terminal 100 or the mobile terminal 200. Illustrated actions 130 to 140 will be each described below.

As described in the example illustrated in FIG. 4, a nod 130 is detected, for example, on the basis of sensor data acquired by the motion sensor 120 installed in a terminal device such as the eyewear 100a worn on the head of a user. Moreover, the nod 130 may be detected by using sensor data of the geomagnetic sensor 126 that is similarly installed in the terminal device.

A speech section 132 is detected on the basis of speech data including sounds of speech of a user acquired by the microphone 112 as described in the example illustrated in FIG. 4. It may be possible to further detect a speech content 134 from the speech data. In this case, for example, it is possible to detect conversations occurring between users on the basis of the topic commonality of the conversations in addition to the states of interactions between the users indicated by the temporal relationship with the speech section 132.

A body direction 136 is detected, for example, by using sensor data acquired by the geomagnetic sensor 126. As described above with reference to FIG. 9, for example, a non-speaker facing a speaker, and a speaker facing a non-speaker can be positive elements for detecting the occurrence of a conversation in between.

A gesture 138 is detected, for example, by using sensor data acquired by the motion sensor 120 or the geomagnetic sensor 126. For example, similarly to a nod in the example described with reference to FIG. 4, the gesture 138 can be used as an element indicating an interaction between users by specifying the temporal relationship with a speech section.

A pulse 140 is detected, for example, by using the biological sensor 128. For example, in a case where, when users have an active conversation, the pulse 140 also looks likely to increase, it can be possible to estimate whether the state of the pulse matches the state of a conversation between users, or whether users are conversing with each other (e.g., if another action or a feature value indicates an active conversation, but the pulse 140 does not increase, it is possible that the users are not actually conversing with each other).

In a case where the above-described detection results of actions are used, feature values indicating interactions between users can be higher, for example, in a case where the occurrence frequency of the following events is high.

- Reaction of a non-speaker in the form of gestures at the end of speech of a speaker
- Words included in speech have commonality
- Speech contents have commonality, and an answer matches the speech contents
- Body directions of a speaker and a non-speaker intersect each other
- Actions of walking, eating, or the like are common
- Changes of a speaker and a non-speaker in pulse are correlated

Further, the conversation determination unit 15 may consider the context of user behaviors or methods for using specified conversation groups in categorizing users into conversation groups. For example, in a case where a private image of a user is shared between the specified conversation groups, it is possible to prevent the image from being shared with an inappropriate user, by setting a higher threshold for determining that a conversation occurs between users. Further, for example, setting a lower threshold makes it possible to categorize those who converse with a user into a conversation group without showing them in a party or the like, where participants are very likely to converse with each other in a wide area. Moreover, for example, a higher threshold may be set in the daytime, when a user is in the crowd in the city or the like in many cases, to prevent false detection, while a lower threshold may be set in the nighttime in many cases, when a user is in a less crowded place such as homes.

(1-3. Applied Information Generation Example)

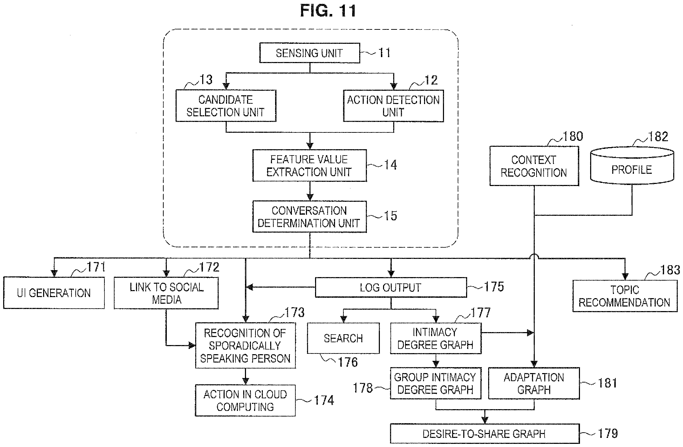

FIG. 11 is a diagram for describing a use example of information obtained from detection of a conversation in an embodiment of the present disclosure. For example, a result obtained by the conversation determination unit 15 determining whether a conversation occurs is used by the score calculation unit 16 and the grouping unit 17 in the example described above with reference to FIG. 3, but a use example of information in the present embodiment is not limited to such an example. Information can be used in other various ways. FIG. 11 illustrates a UI generation unit 171 to a topic recommendation unit 183 as functional components for such use. These functional components are implemented as software in a terminal device or a server, for example, by using a processor and a memory or a storage. The following further describes information provided by these functional components.

(First Example)

The UI generation unit 171 may provide a user interface that displays the states of conversations between users in a chronological order in the form of a graph, for example, as described above with respect to FIGS. 6 to 8. Further, for example, the UI generation unit 171 may provide a user interface that displays the states of conversations in real time in the form of a list as described above. Further, the UI generation unit 171 makes it possible to use the states of conversations displayed in real time in that way in another application. For example, the UI generation unit 171 may cooperate with a link function 172 to social media to make it possible to share data such as images among users belonging to a common conversation group, or support users in concurrently play a game.

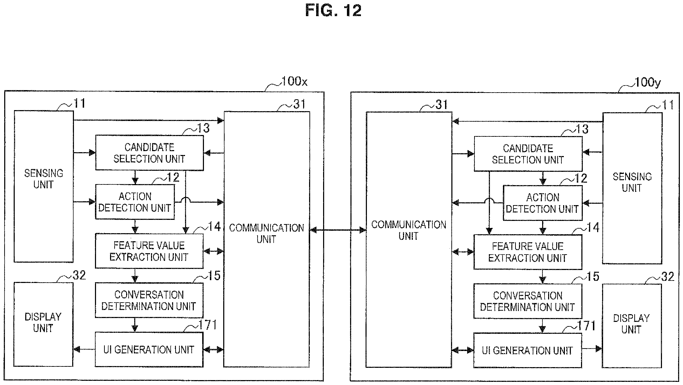

For example, in a case where the states of conversations between users detected as described above are used for various kinds of use, ad hoc conversation group recognition between terminal devices as illustrated in FIG. 12 can make it possible to recognize a conversation group similar to an actual conversation occurrence situation.

Terminal devices 100x and 100y (that are only have to be terminal devices each of which are used by a user, and may be, for example, the wearable terminal 100 or the mobile terminal 200 in the example of FIG. 2. The same applies to the following example) each includes the sensing unit 11, the action detection unit 12, the candidate selection unit 13, the feature value extraction unit 14, the conversation determination unit 15, a communication unit 31, a display unit 32, and the UI generation unit 171 in the example illustrated in FIG. 12. Additionally, the communication unit 31 is implemented by a communication device of Bluetooth (registered trademark) or the like included in each of the terminal devices 100x and 100y. The display unit 32 is implemented by a display such as an LCD included in each of the terminal devices 100x and 100y. The corresponding functional components of the terminal device 100x and the terminal device 100y cooperate with each other to specify that the users of the respective terminal devices belong to a common conversation group in the illustrated example.

More specifically, the candidate selection unit 13 selects a candidate user on the basis of positional information acquired by the sensing unit 11, and positional information acquired by the sensing unit 11 of the other user in the illustrated example. The users of the terminal devices 100x and 100y are then selected as each other's candidate user. Next, the action detection unit 12 specifies a section in which an action such as speech or nodding occurs, on the basis of the sensor data acquired by the sensing unit 11. Moreover, the feature value extraction unit 14 shares information such as the section specified by the action detection unit 12 of each terminal device via the communication unit 31, and extracts a feature value indicating an interaction between the users of the terminal devices 100x and 100y. The conversation determination unit 15 determines on the basis of the extracted feature value whether a conversation occurs between the users of the terminal devices 100x and 100y. The UI generation unit 171 generates a user interface such as the above-described graph or list in accordance with a result of the determination, and presents the generated user interface to each user via the display unit 32.

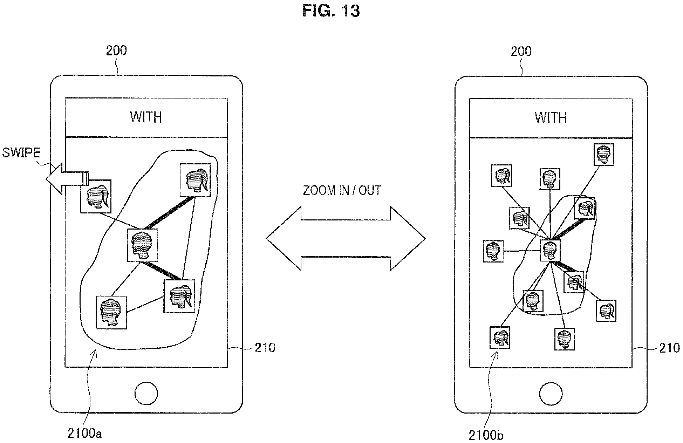

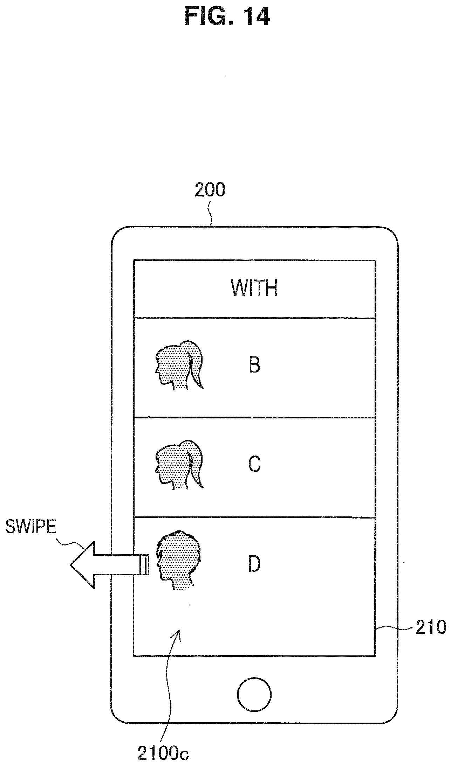

FIGS. 13 and 14 are diagrams each illustrating an example of a user interface provided in the above-described first example. In these examples, there is a screen displayed on a display 210 of the mobile terminal 200 as a user interface (e.g., there may also be a similar screen displayed on the wearable terminal 100). A conversation group of users is displayed in screens 2100a and 2100b in the form of a graph in the example illustrated in FIG. 13. For example, a user can transition between the screen 2100a and the screen 2100b through an operation of zooming in/out. Only other users estimated to be more likely to belong to the same conversation group are displayed in the screen 2100a, for example, by a threshold for relatively high occurrence probability. Meanwhile, other users estimated to belong to the same conversation group are displayed more widely in the screen 2100b, for example, by a threshold for relatively low occurrence probability. A user can correct a recognition result of conversation groups, for example, by operating the icons of other users displayed in the screens 2100a and 2100b via a touch panel or the like. For example, a user can remove another user represented as an icon from a conversation group by performing an operation of swiping the icon of the other user to the outsides of the screens 2100a and 2100b.

A conversation group of users is displayed in a screen 2100c in the form of a list in the example illustrated in FIG. 14. For example, users having the higher occurrence probability of conversations which is calculated by the conversation determination unit 15 may be displayed in the list. The display order of the list can thus dynamically change. The maximum number of users included in a conversation group can be limited by setting the number of users displayed in the list in advance. Further, it is also possible to remove another user displayed in the list in the screen 2100c from a conversation group, for example, by performing an operation of swiping the other user to the outside of the screen 2100c.

(Second Example)

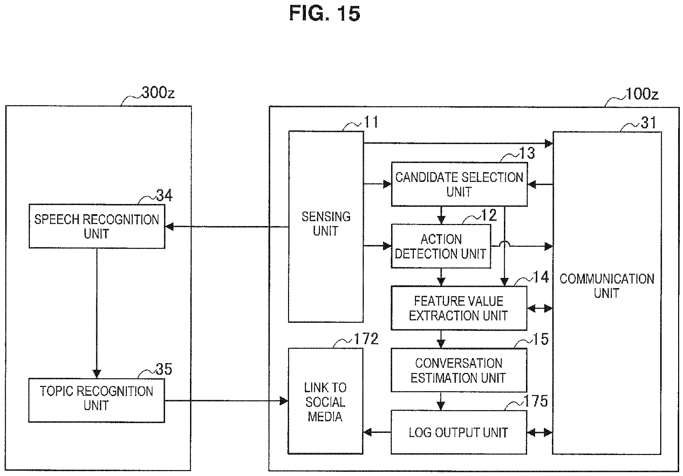

The history of a person with whom a user has conversations is output onto a time line by a log output unit 175 and the link function 172 to social media in a second example. FIG. 15 illustrates functional components for such an output (additionally, it is a terminal device that estimates conversations in the illustrated example, but a server may also estimate conversations). A terminal device 100z includes the sensing unit 11, the action detection unit 12, the candidate selection unit 13, the feature value extraction unit 14, the conversation determination unit 15, the communication unit 31, the log output unit 175, and the function 172 for linking to social media in the example illustrated in FIG. 15. The log output unit 175 outputs a log including at least any of information of a person with whom at least one user included in users (all the users who are processing targets) converses, or information of a conversation with a person who converses, on the basis of a conversation occurrence history based on determination of the conversation determination unit 15. The log generated by the log output unit 175 is output onto the time line of social media presented to the at least one user via the function 172 for linking to social media (the log generated by the log output unit 175 may also be output to a time line that is not related to the social media in another example). Further, a speech recognition unit 34 and a topic recognition unit 35 are implemented as software in the server 300z.

Functional components as described above can recommend, as a friend, another user in social media who, for example, has conversations (which can be determined on the basis of conversation time or high conversation probability) to some extent. This eliminates the necessity to take the trouble of registering another user with whom a user has conversations, as a friend in social media. Further, logs based on conversation occurrence histories can also be referred to in an application for social media or the like. Information such as topics of conversations recognized through processing of the speech recognition unit 34 and the topic recognition unit 35, information of places where conversations occur, images, or the like may be then added to the logs. For example, if conversation logs are filtered and displayed in accordance with topics or persons with whom a user has conversations, the conversation logs are useful as a tool for assisting the user in memory or a means for recording memories.

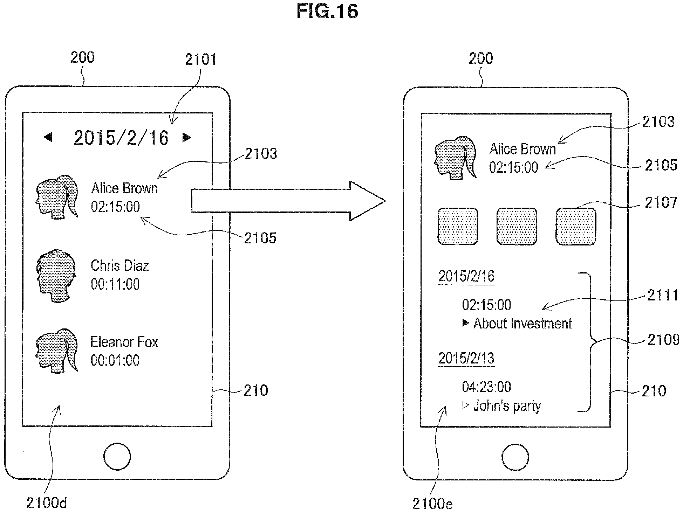

FIG. 16 is a diagram illustrating an example of a user interface provided in the above-described second example. In this example, there is a screen displayed on the display 210 of the mobile terminal 200 as a user interface (e.g., there may also be a similar screen displayed on the wearable terminal 100). A date 2101 and a list of other users on a time line with whom a user converses on that day are displayed in a screen 2100d in the example illustrated in FIG. 16. The list can include, for example, a name 2103 and a conversation time 2105 of another user. The user can display a conversation history screen 2100e of any of users listed on the screen 2100d, for example, by selecting the user. The screen 2100e includes the name 2103 and the conversation time 2105 of another user, an icon 2107 for making friends with the user in social media, and a past conversation history 2109 with the user. A conversation topic 2111 may be displayed in the past conversation history in addition to the date when a conversation occur, and the conversation time.

(Third Example)

It is possible in a third example to make an action on a person with whom conversations are not necessarily exchanged, for example, on social media in the above-described second example. As described above, the feature value extraction unit 14 can not only extract feature values on the basis of the relationship between the respective sounds of speech of users, but also extract feature values on the basis of the temporal relationship between sounds of speech of one user and an action (such as a motion or a biological indicator) other than speech of the other user in the present embodiment. If this is used, for example, a sporadically conversing person recognition unit 173 can recognize not only another user with whom a user exchanges speech and converses, but also another user who shows some reactions to the speech of the user or another user whose speech an action of the user is pointed to and display him or her on a time line provided by the log output unit 175. The user can make an action 174 on the other user (who is not an acquaintance in many cases) in cloud computing on the basis of this. For example, an avatar of the other user is just visible at this time in the action in cloud computing because of privacy protection, but personal information does not necessarily have to be exchanged.

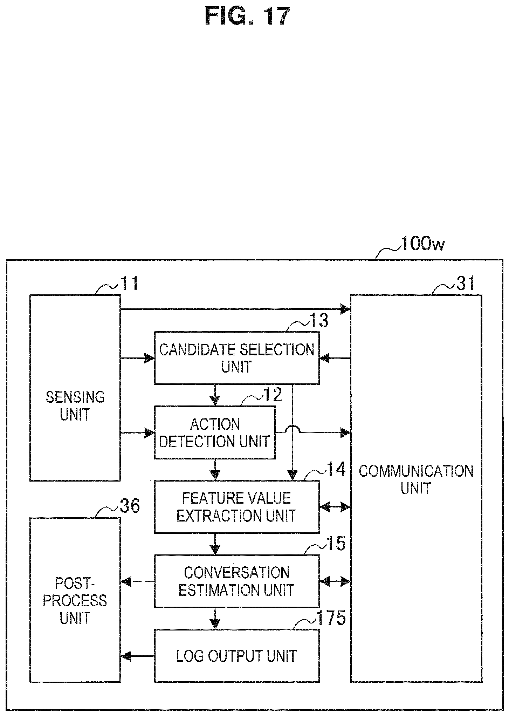

FIG. 17 is a diagram illustrating a functional component for such an output described above. A terminal device 100w includes the sensing unit 11, the action detection unit 12, the candidate selection unit 13, the feature value extraction unit 14, the conversation determination unit 15, the communication unit 31, the log output unit 175, and a post-process unit 36 in the example illustrated in FIG. 16. Additionally, the post-process unit 36 corresponds to the above-described sporadically conversing person recognition unit 173, and the action 174 in cloud computing. For example, the post-process unit 36 is implemented as software by a processor included in the terminal device 100w operating in accordance with a program.

The log output unit 175 outputs, as a log, a result obtained by generating a conversation group in the illustrated example. The post-process unit 36 specifies another user for whom communication including a conversation of a predetermined time or less or speech of only one user is detected in the log. Moreover, the post-process unit 36 can extract another user whom the user temporarily meets and make an action on such a user in cloud computing by removing users who have already been friends in social media from among the specified users.

(Fourth Example)

The topic recommendation unit 183 illustrated in FIG. 11 provides a topic, thereby supporting communication between users in a fourth example. For example, the topic recommendation unit 183 estimates the degree to which conversations are active from the tempo of the conversations indicated by a feature value extracted by the feature value extraction unit 14, and accordingly recommends a topic. More specifically, in a case where the occurrence probability of conversations calculated by the conversation determination unit 15 tends to decrease or the separately estimated degree to which conversations are active (e.g., estimated on the basis of the tempo of speech of the user or the voice volume) tends to decrease, the topic recommendation unit 183 may determine that the user needs a new topic and recommend a topic different from the old topic. Further, for example, in a case where the occurrence probability of conversations tends to increase or the degree to which conversations are active tends to increase, the topic recommendation unit 183 may determine that the current topic continues and provide information on the current topic to the user.

Further, as another example, the topic recommendation unit 183 may provide a topic to the user in accordance with a log output by the log output unit 175 or an intimacy degree calculated by an intimacy degree graph generation unit 177 described below. More specifically, for example, in a case where the user converses with a person with whom the user constantly converses (person having a large number of logs of conversations with the user), or a person having a high intimacy degree, the topic recommendation unit 183 may determine that a new topic is provided in a case where the conversations are inactive as described above because the conversations are supposed to be active in theory. Meanwhile, in a case where the user converses with a person with whom the user does not converse much (person having few logs of conversations with the users) or a person having a low intimacy degree, the topic recommendation unit 183 may refrain from providing new topics although the conversations are estimated to be inactive as described above because conversations are not necessary in particular in some cases.

(Fifth Example)

The intimacy degree graph generation unit 177 illustrated in FIG. 11 generates a graph indicating the intimacy degree between users on the basis of the log output by the log output unit 175 in a fifth example. The intimacy degree graph generated here can also be a graph structure expressing the relationship between users on the basis of the occurrence probability of conversations. Thus, the intimacy degree graph generation unit 177 can also be a relationship graph specification unit that specifies such a graph structure. The intimacy degree graph generation unit 177 generates a strong link in an intimacy degree graph between users having, for example, a high conversation frequency or a long total conversation time, which is showed, for example, by a log of the log output unit 175. Further, the intimacy degree graph generation unit 177 may estimate an intimacy degree on the basis of the quantity or the types of reactions extracted by the action detection unit 12 or the feature value extraction unit 14, and generate a strong link between users having a high intimacy degree. More specifically, the intimacy degree graph generation unit 177 may change the strength of the link between users in the intimacy degree graph in accordance with whether a certain user frequently speaks or only nods in conversations with another user. Further, the intimacy degree graph generation unit 177 may provide a label (such as a parent, a brother, a boss, a coworker, a friend, or a boyfriend/girlfriend) to the link between users, for example, on the basis of information (such as a profile of a user) acquired from the outside. Similarly, the intimacy degree graph generation unit 177 may provide a label (such as a family, a company, colleagues, a circle) to a group generated on the intimacy degree graph.

As an example, the intimacy degree graph generation unit 177 may calculate an intimacy degree C with another user by using an equation such as the following expression 1. Additionally, it is assumed that each conversation occurring between a user and another user is provided with an index i. $t_{now}$ represents the current time. $t_{past\_i}$ represents the time at which an i-th conversation with another user occurs (older conversations thus have less influence on the intimacy degree in the expression 1). $duration_i$ represents the total time of the i-th conversation. $speak_i$ represents a speaking time in the i-th conversation. $nod_i$ represents a nodding time in the i-th conversation (thus, as a speaking time increases as compared with a nodding time, the intimacy degree also increases in the expression 1). $positive_i$ and $negative_i$ represent a user's emotion (positive and negative. If the positive emotion is stronger, the intimacy degree has a plus value in the expression 1, while if the negative emotion is stronger, the intimacy degree has a minus value) estimated on the basis of biological information or the like about another user with whom the user has the i-th conversation.

[Math. 1]

$$C = \left\{ \sum_i \exp\left(-\left(t_{now} - t_{past\_i}\right)\right) \cdot duration_i + \sum_i \frac{speak_i}{nod_i} \right\} \cdot \sum_i \left(positive_i - negative_i\right)$$

$$\bullet \ \bullet \ \bullet \ \textbf{(Expression 1)}$$

(Sixth Example)

A desire-to-share graph generation unit 179 illustrated in FIG. 11 applies a filter generated by an adaptation graph generation unit 181 to the intimacy degree graph generated by the intimacy degree graph generation unit 177 in a sixth example, thereby setting the range within which a user shares content. The desire-to-share graph generation unit 179 is an example of a sharing user specification unit that, in a phase in which at least one user included in users (all the users who are processing targets) shares the information, specifies the other user who shares the information by applying a filter related to the information to be shared to a graph structure expressing the relationship between users. Much content such as images, sounds, materials, and life logs closely focusing on the lives of individual users has been acquired in recent years. Accordingly, it can be useful to automatically set the sharing range for such content or automatically narrow down candidates for the sharing range.

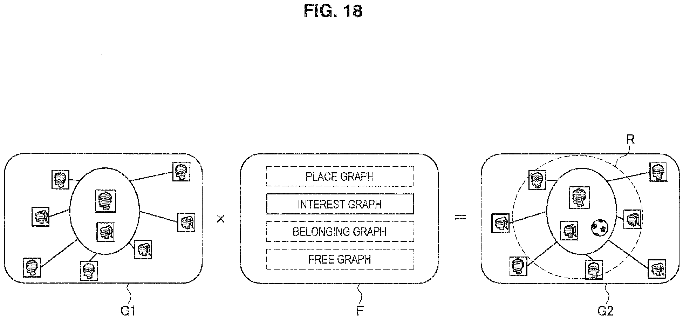

FIG. 18 is a diagram for schematically describing the generation of a desire-to-share graph in the present embodiment. FIG. 18 illustrates that a desire-to-share graph G2 is obtained by applying a filter F to a group intimacy degree graph G1. Here, the group intimacy degree graph G1 is generated, for example, by a group intimacy degree graph generation unit 178 illustrated in FIG. 11. The group intimacy degree graph G1 is generated, for example, by integrating, for a given user group (including users), intimacy degree graphs generated by the intimacy degree graph generation unit 177 for the respective individual users.

Further, the filter F corresponds to an adaptation graph generated by the adaptation graph generation unit 181, and the filter F related to information to be shared is selected. A graph of interests is selected from graphs of places, interests, groups, and the like, and the filter F corresponding thereto is applied in the illustrated example. As illustrated in FIG. 11, the adaptation graph generation unit 181 generates an adaptation graph that provides the appropriate filter F, on the basis of context (in what situation and what type of content is shared) at the time of sharing content recognized by the context recognition unit 180 or a profile 182 of a user.

As a result, the positional relationship between other users included in the graph changes in the desire-to-share graph G2 as compared with the group intimacy degree graph G1. A certain user has a link strengthened by applying the filter F, while another user has a link weakened by applying the filter F (the strength of links are expressed in the form of the distances from the center of the graph in the illustrated example). As a result, in a case where content is shared with another user whose link has strength exceeding a predetermined threshold (or such a user is treated as a candidate for a sharing destination of content), it is possible to set the more appropriate sharing destination or a candidate therefor corresponding to the type of content or the context in which content is shared than a case where a sharing destination or a candidate therefor is decided simply by using the group intimacy degree graph G1.

Here, a more specific example will be used to describe an example of dynamically selecting the adaptation graph from which the filter F originates. For example, in a case where a user goes on a trip, the adaptation graph corresponding to the attribute of places may be selected and the link to another user at the current position (trip destination) of a user may be strengthened (filter configured on the basis of the positional relationship between users included in the graph structure). Further, for example, in a case where a user is at work, the adaptation graph corresponding to work may be selected and the link to another user (such as a coworker) having a working relationship may be strengthened (filter configured on the basis of a group to which a user included in the graph structure belongs). Further, for example, in a case where a user is playing or watching a sport, the adaptation graph corresponding to interests may be selected and the link to another user interested in the sport may be strengthened (filter configured on the basis of what a user included in the graph structure is interested in). Further, for example, in a case where a user is participating in a party (social gathering) in which anyone can participate, an adaptation graph (filter configured on the basis of behavior information of a user included in the graph structure) may be selected to strengthen the link to another user having nothing to do at that time. Further, for example, in a case where a user is confronted with something unknown and has trouble, an adaptation graph (filter configured on the basis of the knowledge of a user included in the graph structure) may be selected to strengthen the link to another user who has the knowledge.

Additionally, adaptation graphs may be combined to configure the filter F. Further, it may be selectable to use no adaptation graph (apply substantially no filter F). As described above, the adaptation graph generation unit 181 automatically (e.g., rule-based) select an adaptation graph on the basis of the recognized context, the profile of a user, or the like. The adaptation graph generation unit 181 may be, however, capable of presenting selectable adaptation graphs to a user in the form of lists, tabs, or the like, and then selecting an adaptation graph in accordance with the selection of the user. In this case, the adaptation graph generation unit 181 may be configured to select an adaptation graph in accordance with the selection of a user and learn a selection criterion of an adaptation graph (based on the context of the situation of the user, the type of content to be shared, or the like) on the basis of selection results of the user at the initial stage, and then automatically select an adaptation graph.

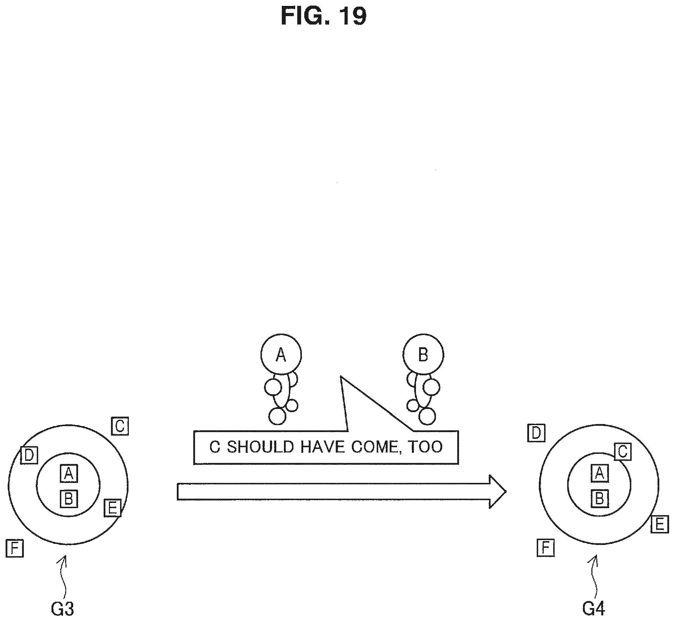

FIG. 19 is a diagram for describing the dynamic correction of an intimacy degree graph in the present embodiment. A group intimacy degree graph G3 for a user A and a user B is positionally corrected by the comment "C should have come, too" made by the user A in conversations between the user A and the user B to generate an intimacy degree graph G4 in which the links between a user C and the users A and B are strengthened (the position of the user C is moved closer to the center of the graph) in the illustrated example. At this time, for example, in a case where there is a rule to maintain the total strength of links constant in an intimacy degree graph, the link to the user C is strengthened and the links to the other users (users D to F) are weakened all the more (the positions are moved farther from the center of the graph).

The link to the user C is strengthened in the illustrated example because the user A mentions the name of the user C in the actual speech. However, the similar processing is also possible, for example, in a case where the name of the user C is included in sentences input by the user A (or the user B) when the user A and the user B have an online chat. The above-described example can also be an example in which the group intimacy degree graph generation unit 178 temporarily corrects an intimacy degree graph (graph structure expressing the relationship between users) specified on the basis of the occurrence histories of conversations between the user A and another user (including the user C) within a certain period of time (first period of time) in a case where the name of the user C is included in the contents sent by the user A in conversations (which may be actual conversations or virtual conversations such as online chats) occurring between the user A and another user (user B in the above-described example) within the most recent second period of time shorter than the first period of time. More specifically, the group intimacy degree graph generation unit 178 temporarily strengthens the relationship between the user A and the user C in a group intimacy degree graph in this example. As a similar example, the group intimacy degree graph generation unit 178 may temporarily strengthen the link to another user to whom the user casts the line of sight in the intimacy degree graph.

If content is shared as described in the above-described sixth example, the desire-to-share graph (G3 illustrated in FIG. 18) is presented to a user, for example, as an image. The sharing range (range R illustrated in G3 of FIG. 18) may be superimposed on the desire-to-share graph. Moreover, not only the desire-to-share graph, but a group intimacy degree graph or an adaptation graph may also be displayed. First, automatically generated candidates are presented to the user, the user corrects the candidates, and the sharing range R is then finally decided in a certain example. The user can correct the sharing range R, for example, by increasing/decreasing the size of a figure such as a circle representing the sharing range R, including another user displayed as an icon in the sharing range R, or removing another user displayed as an icon from the sharing range R. The desire-to-share graph generation unit 179 may additionally learn the intention of the user regarding the sharing range from a correction result of the sharing range R of the user, and the desire-to-share graph generation unit 179 may then automatically set the appropriate sharing range R.

If content is shared in the above-described configuration, for example, a user with whom content is shared can be satisfied very much by selectively sharing content of another really intimate user or content in which the user can be interested when content is shared. Further, if content (such as watching sports games live) that is experienced by a certain user in real time is shared with another user in a remote place in real time, the experience can be shared.

(1-4. Supplemental Information on First Embodiment)

The embodiments of the present disclosure may include, for example, an information processing device as described above, a system, an information processing method executed by the information processing device or the system, a program for causing the information processing device to function, and a non-transitory tangible medium having the program recorded thereon.

Additionally, conversations can be detected between users in the system in the description of the above-described embodiment. However, the conversations detected between users are not necessarily limited in the above-described embodiment to conversations in which the related users all speak as already described. For example, a case can also be detected where only a part of the users speaks, and the other users make an action such as nodding in accordance with the speech. It can be thus the occurrence of communication (conversations are a type of communication) between users that can be detected in an embodiment of the present disclosure in addition to a case where such a case is detected separately from conversations in another embodiment. The conversation determination unit can be thus an example of a communication determination unit.

<2. Second Embodiment>

(2-1. Overview and System Configuration)

The embodiment has been described above in which it is determined whether a conversation occurs between a target user and a candidate user, on the basis of a feature value indicating an interaction between the users. The following describes a second embodiment, which is an application example of the above-described first embodiment. A system in which positioning information is transferred between users will be described in the second embodiment.

GNSS positioning consumes much power. It is desirable to enable GNSS positioning with less power in a terminal such as the mobile terminal 100 or the wearable terminal 200 including a small battery. The following then describes an embodiment in which positioning information is transferred between users.

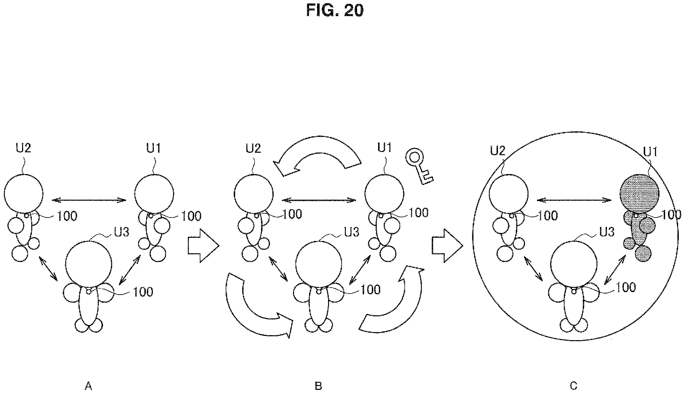

FIG. 20 is a diagram illustrating the overview of a GNSS positioning method in the second embodiment. As illustrated in A of FIG. 20, the wearable terminal 100 of a pendant type or a glasses type or a wristwatch type, or the like is used in the second embodiment, thereby forming a group among users. FIG. 20 describes a case where the three users from U1 to U3 form a group. Additionally, the users include at least one accompanying person who accompanies a specific user. The relationship between the specific user and the accompanying person is not, however, important. The other user (the other users if there are some users) as viewed from one user is treated as an accompanying person. Further, a method for recognizing accompanying persons included in the group will be described below.

Next, as illustrated in B of FIG. 20, GNSS positioning rights (which are schematically represented as key figures in B of FIG. 20) for GNSS positioning are transferred between users in the formed group. Next, as illustrated in C of FIG. 3, the wearable terminal 100 of the user U1 having a GNSS positioning right performs GNSS positioning, and the wearable terminals 100 of the other users (U2 and U3) having no GNSS positioning rights receive positioning information from the wearable terminal 100 of the user U1, which performs GNSS positioning, and share the positioning information. The received positioning information is then used as a representative value (information such as latitude and longitude, or the like) of the group.

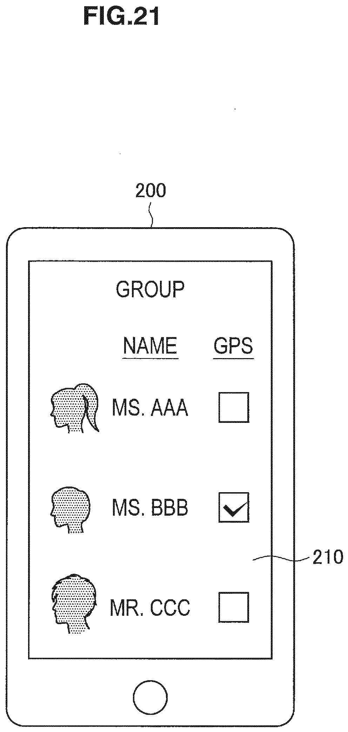

Additionally, the above-described GNSS positioning rights may be transferred at predetermined time intervals. Further, in a case where the remaining battery level of each wearable terminal 100 is recognized, the GNSS positioning right may be transferred to the wearable terminal 100 having a higher remaining battery level. If GNSS positioning is performed by the wearable terminal 100 having a higher remaining battery level in this way, it is possible to smooth the remaining battery levels of the terminals in the group. Further, as illustrated in FIG. 21, the GNSS positioning right may be transferred via the operation screen displayed on the mobile terminal 200 of a user.

In FIG. 21, three users are recognized in a group. It is then shown that "Ms. BBB" currently has a GNSS positioning right. That is, a check indicating that Ms. BBB has a GNSS positioning right is displayed in the check box next to the name of Ms. BBB in the display screen. When a user wants to transfer a GNSS positioning right to another user, the user transfers a GNSS positioning right to the other user by checking the check box displayed next to the name of the user to whom the user wants to transfer a GNSS positioning right.

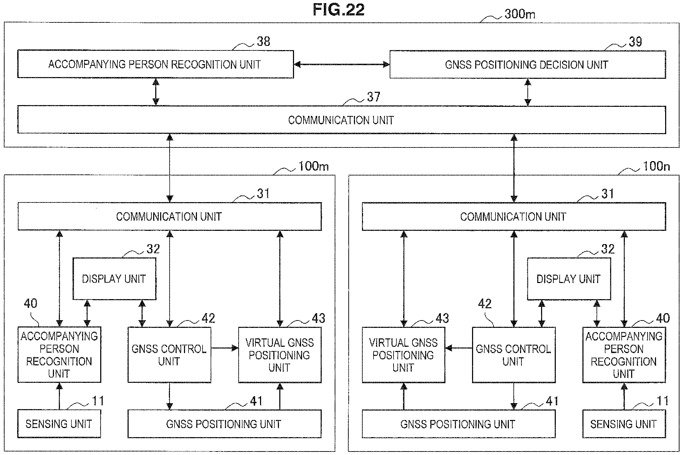

FIG. 22 is a diagram illustrating the system configuration of a system that performs the above-described operation. The system according to the present embodiment includes a server 300m and wearable terminals 100m and 100n. Additionally, the number of wearable terminals 100 is not limited to two.

The server 300m includes a communication unit 37, an accompanying person recognition unit 38, and a GNSS positioning decision unit 39. The communication unit 37 communicates with each of the wearable terminals 100m and 100n. Further, the accompanying person recognition unit 38 groups accompanying persons on the basis of information sent from each of the wearable terminals 100m and 100n. Further, the GNSS positioning decision unit 39 decides to which user a GNSS positioning right is provided in a group recognized by the accompanying person recognition unit 38.

Further, the wearable terminals 100m and 100n includes the communication unit 31, the display unit 32, the sensing unit 11, an accompanying person recognition unit 40, a GNSS positioning unit 41, a GNSS control unit 42, and a virtual GNSS positioning unit 43. Here, the communication unit 31 communicates with the server 300m. Further, the display unit 32 displays information such as information on users belonging to a group. Additionally, the communication unit 31 is implemented by communication devices of Bluetooth (registered trademark), Wi-Fi, or the like included in the respective wearable terminals 100m and 100n as described above.

Further, the sensing unit 11 may include a microphone, an acceleration sensor, and/or a gyro sensor as described above, and further include an imaging unit such as a camera. Further, the accompanying person recognition unit 40 receives information from the sensing unit 11 and the communication unit 31, and transmits the received information to the accompanying person recognition unit 38 of the server 300m via the communication unit 31. Further, the accompanying person recognition unit 40 receives information of an accompanying person recognized by the accompanying person recognition unit 38 of the server 300m. Additionally, this information of an accompanying person may also be displayed on the display unit 32, and the displayed information of an accompanying person may be corrected by a user.

The GNSS positioning unit 41 receives GNSS signals from a GNSS satellite for positioning. The virtual GNSS positioning unit 43 uses positioning information received from another terminal to determine the position of an own terminal. Next, the GNSS control unit 42 switches whether to turn on the GNSS positioning unit 41 or the virtual GNSS positioning unit 43, on the basis of a GNSS positioning right generated by the GNSS positioning decision unit 39 of the server 300m. Further, as described above with reference to FIG. 21, in a case where a GNSS positioning right is manually changed, the GNSS control unit 42 recognizes that a GNSS positioning right is manually changed, and switches whether to turn on the GNSS positioning unit 41 or the virtual GNSS positioning unit 43.

The operation of the above-described configuration will be specifically described below. The accompanying person recognition units 40 of the wearable terminals 100m and 100n receive the following information from the sensing unit 11 or the GNSS control unit 42 or the communication unit 31.

(1) Positioning information generated by the GNSS positioning unit 41 or the virtual GNSS positioning unit 43
(2) Terminal identification information (ID) of Bluetooth (registered trademark) or Wi-Fi of the other terminal that is received
(3) Sounds received by a microphone
(4) Information of captured images taken by a camera

The accompanying person recognition units 40 of the wearable terminals 100m and 100n transmit the information described above in (1) to (4) to the accompanying person recognition unit 38 of the server 300m. The accompanying person recognition unit 38 of the server 300m, which receives the information, then determines the distance to each wearable terminal 100, for example, from the positioning information in (1). If the distance is a predetermined distance or less, the user who possesses the wearable terminal 100 may be recognized as an accompanying person.

Further, with respect to the terminal identification information in (2), the accompanying person recognition unit 38 of the server 300m may recognize, as an accompanying person, the user who possesses the wearable terminal 100 whose terminal identification information is observes on a long-term basis. That is, in a case where the wearable terminal 100 having terminal identification information A observes the wearable terminal 100 of terminal identification information B on a long-term basis, the user who possesses the wearable terminal 100 having the terminal identification information B is identified as an accompanying person.

Further, the accompanying person recognition unit 38 of the server 300m may perform environmental sound matching on the basis of the sound information in (3), and recognize the user of a wearable terminal having similar sound information as an accompanying person. Further, the accompanying person recognition unit 38 of the server 300m may recognize, on the basis of the image information in (4), a person recognized in captured images within a predetermined period of time as an accompanying person. Person data (such as face image data) used for image recognition may be then stored in each of the wearable terminals 100m and 100n, and the accompanying person recognition units 40 of the wearable terminals 100m and 100n may transmit the person data to the server 300m.

Further, the above-described accompanying person recognition unit 38 of the server 300m may recognize an accompanying person on the basis of an action such as a user's nod or hand movement (gesture) described in the first embodiment, or a feature value indicating an interaction between users (i.e., accompanying persons) which is based on the sounds of speech between the users. Further, various kinds of information in (1) to (4) and various kinds of information of an interaction between users user may be integrated to recognize an accompanying person. If an accompanying person is selected on the basis of the above-described various kinds of information, the recognition method corresponding to the conditions of the wearable terminals 100m and 100n is selected. For example, when a camera is activated, information of captured images of the camera may be used to recognize an accompanying person. Further, when a microphone is activated, sound information may be used to recognize an accompanying person. Further, the integration and use of some kinds of information make it possible to more accurately identify an accompanying person. As described above, various kinds of information in (1) to (4) and various kinds of information of an interaction between users can be an example of accompanying person recognition information used to recognize an accompanying person.

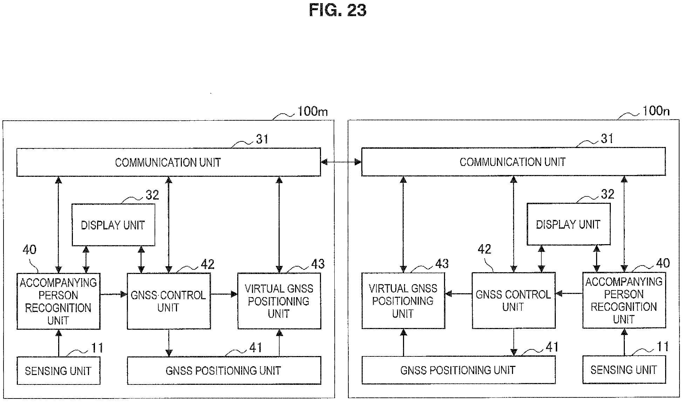

The above describes the example in which an accompanying person is recognized in the accompanying person recognition unit 40 of the server 300m via the server 300m. An accompanying person may be, however, recognized through communication between the respective wearable terminals 100m and 100n. FIG. 23 is a diagram illustrating the configuration of an example in which an accompanying person is recognized in each of the wearable terminals 100m and 100n. The accompanying person recognition unit 40 in FIG. 23 has the function of the accompanying person recognition unit 38 of the server 300m in FIG. 22. Further, the GNSS control unit 42 in FIG. 23 has the function of the GNSS positioning decision unit 39 of the server in FIG. 22. Further, the mobile terminal 200 configured in a similar way may form a similar system.

The above describes the example in which GNSS positioning rights are transferred among grouped users. The following describes an example in which positioning information of a device such as a vehicle including a sufficiently large power source and capable of GNSS positioning is used.

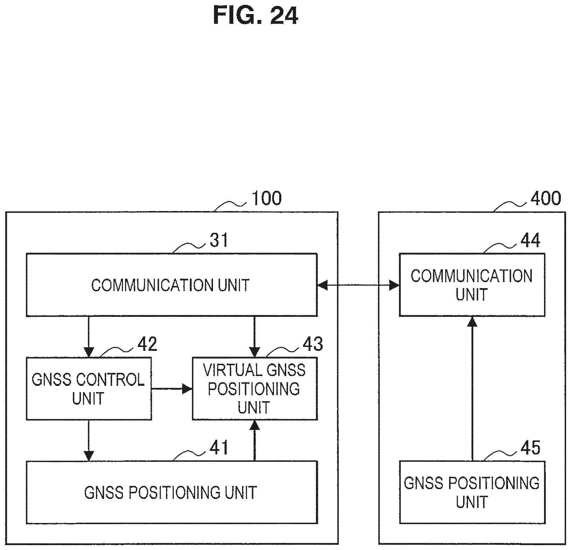

FIG. 24 is a block diagram illustrating a vehicle 400 including a GNSS positioning unit 45, and the wearable terminal 100 that uses positioning information measured by the vehicle 400. The wearable terminal 100 and the vehicle 400 illustrated in FIG. 24 are associated with each other through communication established by the communication units 31 and 44. The wearable terminal 100 and the vehicle 400 illustrated in FIG. 24 may be associated with each other, for example, through pairing of Bluetooth (registered trademark) or the like.

The GNSS control unit 42 of the wearable terminal 100 associated with the vehicle 400 powers off the GNSS positioning unit 41. The GNSS control unit 42 then acquires positioning information measured by the GNSS positioning unit 45 of the vehicle 400 via the communication unit 31. The GNSS control unit 42 turns on the virtual GNSS positioning unit 43, and recognizes the position of an own terminal by using the acquired control information. Once the association of the wearable terminal 100 with the vehicle 400 is released, the wearable terminal 100 turns on the GNSS positioning unit 41 of the wearable terminal 100 and performs positioning by itself.

In a case where a device such as the vehicle 400 including a sufficient power source is associated with the wearable terminal 100 in this way, the wearable terminal 100 uses positioning information measured by the device including a sufficient power source. This reduces the power consumption of the wearable terminal 100.

(2-2. Application Example)

The above describes the example of the system that uses positioning information measured by another device. The following describes an application example of the system. Positioning information is shared between terminals positioned adjacent to each other in the application example. This application example is effective in a situation in which a large amount of terminals crowd a limited area such as a shopping mall.

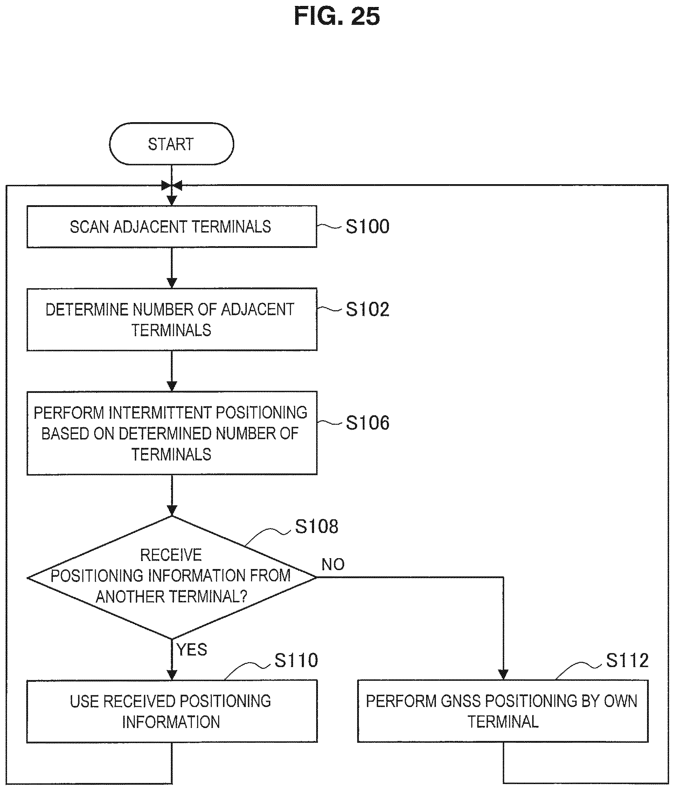

FIG. 25 is a flowchart illustrating the operation of the application example. First, in S100, the wearable terminal 100 scans adjacent terminals by using the communication unit 31 of Bluetooth (registered trademark) or the like. At this time, near-field communication such as Bluetooth Low Energy allows the communication unit 31 of the wearable terminal 100 to detect terminals within a radius of some meters.

Next, in S102, the wearable terminal 100 determines the number of adjacent terminals scanned in S100. Next, in S106, the wearable terminal 100 performs intermittent positioning described below in detail on the basis of the number of adjacent terminals determined in S102.

Next, the wearable terminal 100 determines in S108 whether to receive positioning information from another terminal. Here, in a case where no positioning information is acquired from another terminal, the processing proceeds to S112 and the wearable terminal 100 performs GNSS positioning by itself. If the wearable terminal receives positioning information from another terminal in S108, the processing proceeds to S110 and the wearable terminal uses the positioning information received from the other terminal to recognize the position of an own terminal. The processing then returns to S100, and the above-described processing is repeated.

The above describes the operation of the application example of the second embodiment. The following describes the intermittent positioning in S106 of FIG. 25 in more detail. As described above, in a case where the wearable terminal 100 receives positioning information from another terminal, the wearable terminal that receives the positioning information does not have to perform positioning by itself. The wearable terminal 100 can therefore intermittently perform positioning in the above-described system.

Further, as described above, in a case where the wearable terminal 100 intermittently performs positioning, the intermittence rate may be changed in the accordance with the number of adjacent terminals determined in S102. It is assumed that the number of adjacent terminals determined in S102 is, for example, ten, and each performs positioning at an intermittence rate of 90%. Here, an intermittence rate of 90% means that the GNSS positioning unit 41 is turned on, for example, for only one second every ten seconds.

The probability that the nine terminals other than the own terminal do not perform positioning is $0.9\text{\textasciicircum}10 \approx 0.35$ (35%) in the above-described situation. Here, the probability that the terminals other than the own terminal do not perform positioning for three straight seconds is $0.35\text{\textasciicircum}3 \approx 0.039$ (3.9%). This probability is very low. That is, there is a very high probability that the wearable terminal 100 can receive positioning information from another terminal at at least approximately 3-second intervals. The wearable terminal 100 can therefore acquire positioning information with sufficient accuracy in the above-described system while maintaining an intermittence rate of 90%.

As understood from the above description, a wearable terminal 199 can increase the intermittence rate if more adjacent terminals are detected, while the wearable terminal 100 has to decrease the intermittence rate if fewer adjacent terminals are detected. Intermittently operating the GNSS positioning unit 41 in this way allows the wearable terminal 100 to save power. Further, GNSS positioning may be executed by being complemented with past positioning information in the GNSS positioning method for intermittent positioning. At this time, if the past positioning information is too old, complementation can be impossible. Meanwhile, the use of the above-described system makes it possible to acquire positioning information from another terminal in spite of the increased intermittence rate. Accordingly, positioning information is appropriately complemented.

(2-3. Supplemental Information of Second Embodiment)

The embodiments of the present disclosure may include, for example, an information processing device as described above, a system, an information processing method executed by the information processing device or the system, a program for causing the information processing device to function, and a non-transitory tangible medium having the program recorded thereon.

Additionally, the example in which an accompanying person is recognized from various kinds of information detected by the wearable terminal 100 has been described in the above-described embodiment. An accompanying person may be, however, recognized by using a dedicated application that registers a user as an accompanying person in advance. Further, an accompanying person may be recognized by using a group function of an existing social network service (SNS).

<3. Hardware Configuration>

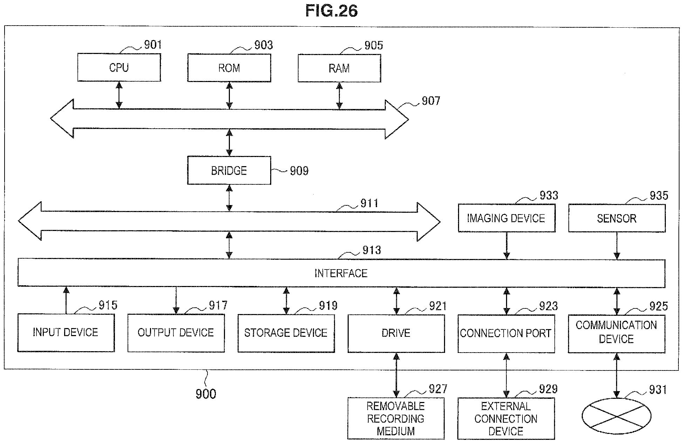

Next, the hardware configuration of the information processing device according to the embodiment of the present disclosure will be described with reference to FIG. 26. FIG. 26 is a block diagram illustrating a hardware configuration example of the information processing device according to the embodiment of the present disclosure.

The information processing device 900 includes a central processing unit (CPU) 901, read only memory (ROM) 903, and random access memory (RAM) 905. Further, the information processing device 900 may include a host bus 907, a bridge 909, an external bus 911, an interface 913, an input device 915, an output device 917, a storage device 919, a drive 921, a connection port 923, and a communication device 925. Moreover, the information processing device 900 may include an imaging device 933 and a sensor 935 as necessary. The information processing device 900 may include a processing circuit such as a digital signal processor (DSP), an application specific integrated circuit (ASIC), or a field-programmable gate array (FPGA) instead of or in combination with the CPU 901.

The CPU 901 functions as an operation processing device and a control device, and controls all or some of the operations in the information processing device 900 in accordance with a variety of programs recorded on the ROM 903, the RAM 905, the storage device 919, or a removable recording medium 927. The ROM 903 stores a program, an operation parameter, and the like which are used by the CPU 901. The RAM 905 primarily stores a program which is used in the execution of the CPU 901 and a parameter which is appropriately modified in the execution. The CPU 901, the ROM 903, and the RAM 905 are connected to each other by the host bus 907 including an internal bus such as a CPU bus. Moreover, the host bus 907 is connected to the external bus 911 such as a peripheral component interconnect/interface (PCI) bus via the bridge 909.

The input device 915 is a device which is operated by a user, such as a mouse, a keyboard, a touch panel, a button, a switch, and a lever. The input device 915 may be, for example, a remote control device using infrared light or other radio waves, or may be an external connection device 929 such as a mobile phone operable in response to the operation of the information processing device 900. The input device 915 includes an input control circuit which generates an input signal on the basis of information input by a user and outputs the input signal to the CPU 901. By operating the input device 915, a user inputs various types of data to the information processing device 900 or requires a processing operation.

The output device 917 includes a device capable of notifying a user of the acquired information via senses of sight, hearing, touch, and the like. The output device 917 can be a display device such as a liquid crystal display (LCD) or an organic electro-luminescence (EL) display, a sound output device such as a speaker or headphones, a vibrator, or the like. The output device 917 outputs a result obtained by the information processing device 900 performing processing as video such as text or images, audio such as speech or sounds, vibration, or the like.

The storage device 919 is a device for data storage which is configured as an example of a storage unit of the information processing device 900. The storage device 919 includes, for example, a magnetic storage device such as a hard disk drive (HDD), a semiconductor storage device, an optical storage device, or a magneto-optical storage device. The storage device 919 stores a program, for example, to be executed by the CPU 901, various types of data, various types of data acquired from the outside, and the like.

The drive 921 is a reader/writer for the removable recording medium 927 such as a magnetic disk, an optical disc, a magneto-optical disk, and a semiconductor memory, and is built in the information processing device 900 or externally attached thereto. The drive 921 reads out information recorded in the removable recording medium 927 attached thereto, and outputs the read-out information to the RAM 905. Further, the drive 921 writes record into the mounted removable recording medium 927.

The connection port 923 is a port used to connect a device to the information processing device 900. The connection port 923 may include, for example, a universal serial bus (USB) port, an IEEE1394 port, and a small computer system interface (SCSI) port. The connection port 923 may further include an RS-232C port, an optical audio terminal, a high-definition multimedia interface (HDMI) (registered trademark) port, and so on. The connection of the external connection device 929 to the connection port 923 makes it possible to exchange various types of data between the information processing device 900 and the external connection device 929.

The communication device 925 is, for example, a communication interface including a communication device or the like for a connection to a communication network 931. The communication device 925 may be, for example, a communication card for a local area network (LAN), Bluetooth (registered trademark), Wi-Fi, a wireless USB (WUSB), or the like. Further, the communication device 925 may be a router for optical communication, a router for an asymmetric digital subscriber line (ADSL), a modem for various kinds of communication, or the like. The communication device 925 transmits a signal to and receives a signal from, for example, the Internet or other communication devices on the basis of a predetermined protocol such as TCP/IP Further, the communication network 931 connected to the communication device 925 may include a network connected in a wired or wireless manner, and is, for example, the Internet, a home LAN, infrared communication, radio wave communication, satellite communication, or the like.

The imaging device 933 is a device that images a real space by using an image sensor such as a complementary metal oxide semiconductor (CMOS) or a charge coupled device (CCD), and a variety of members such as a lens for controlling the formation of an object image on the image sensor, and generates a captured image. The imaging device 933 may be a device that captures a still image, and may also be a device that captures a moving image.

The sensor 935 includes a variety of sensors such as an acceleration sensor, an angular velocity sensor, a geomagnetic sensor, an illuminance sensor, a temperature sensor, a barometric sensor, or a sound sensor (microphone). The sensor 935 acquires information on a state of the information processing device 900, such as the attitude of the housing of the information processing device 900, and information on an environment around the information processing device 900, such as the brightness and noise around the information processing device 900. The sensor 935 may also include a global positioning system (GPS) receiver that receives GPS signals and measures the latitude, longitude, and altitude of the device.

The example of the hardware configuration of the information processing device 900 has been described above. Each of the above-described components may be configured with a general-purpose member, and may also be configured with hardware specialized in the function of each component. Such a configuration may also be modified as appropriate in accordance with the technological level at the time of the implementation.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.

(1) An information processing device including:

a communication determination unit configured to determine, on the basis of a feature value extracted from speech data including at least a sound of speech of a user, whether communication occurs between users including the user, the feature value indicating an interaction between the users.

(2) The information processing device according to (1), in which
the users include a first user and a second user, and
the feature value is extracted on the basis of a temporal relationship between a sound of speech of the first user and a sound of speech of the second user which are included in the speech data.
(3) The information processing device according to (2), in which
the speech data includes first speech data including the sound of speech of the first user, and second speech data including the sound of speech of the second user.
(4) The information processing device according to (2), in which
the speech data includes a single piece of speech data including the sound of speech of the first user, and the sound of speech of the second user.
(5) The information processing device according to any one of (1) to (4), further including:

a feature value extraction unit configured to extract the feature value from the speech data.

(6) The information processing device according to any one of (1) to (5), in which
the communication determination unit determines whether the communication occurs between users selected from the users on the basis of a positional relationship between the users.
(7) The information processing device according to any one of (1) to (6), in which
the communication determination unit determines whether the communication occurs between users selected from the users on the basis of behavior information of each user.
(8) The information processing device according to any one of (1) to (7), in which
the feature value is extracted further from sensor data indicating motions or biological indicators of the users.
(9) The information processing device according to (8), in which
the users include a third user and a fourth user, and
the feature value is extracted on the basis of a relationship between a sound of speech of the third user included in the speech data, and a motion or a biological indicator of the fourth user indicated by the sensor data.
(10) The information processing device according to any one of (1) to (9), further including:

a display control unit configured to display a screen for presenting the communication in a chronological order.

(11) The information processing device according to (10), in which
the communication is presented in the screen in a form corresponding to occurrence probability of the communication calculated on the basis of the feature value.
(12) The information processing device according to any one of (1) to (11), further including:

a log output unit configured to output, on the basis of an occurrence history of the communication, a log including at least one of information of a person with whom at least one user included in the users communicates, or information of a conversation with the person with whom the at least one user included in the users communicates.

(13) The information processing device according to (12), in which
the log output unit outputs the log onto a time line presented to the at least one user.
(14) The information processing device according to any one of (1) to (13), further including:

a relationship graph specification unit configured to specify a graph structure expressing a relationship between the users on the basis of an occurrence history of the communication.

(15) The information processing device according to (14), further including:

a sharing user specification unit configured to apply, in a phase in which at least one user included in the users shares information, a filter related to the shared information to the graph structure, thereby specifying another user who shares the information.

(16) The information processing device according to (15), in which
the filter is configured on the basis of a positional relationship with a user included in the graph structure, a group to which a user included in the graph structure belongs, an interest of a user included in the graph structure, behavior information of a user included in the graph structure, or knowledge of a user included in the graph structure.
(17) The information processing device according to any one of (14) to (16), in which
the relationship graph specification unit temporarily corrects the graph structure specified on the basis of the occurrence history of the communication within a first period of time in accordance with a content of the communication occurring within a most recent second period of time that is shorter than the first period of time.

(18) The information processing device according to (17), in which

the users include a fifth user and a sixth user, and

in a case where a content sent by the fifth user includes a name of the sixth user in the communication occurring within the second period of time, the relationship graph specification unit temporarily strengthens a relationship between the fifth user and the sixth user in the graph structure.

(19) An information processing method including, by a processor:

determining, on the basis of a feature value extracted from speech data including at least a sound of speech of a user, whether communication occurs between users including the user, the feature value indicating an interaction between the users.

(20) A program for causing a computer to execute:

a function of determining, on the basis of a feature value extracted from speech data including at least a sound of speech of a user, whether communication occurs between users including the user, the feature value indicating an interaction between the users.

(21) The information processing device according to (1), including:

an accompanying person recognition unit configured to recognize an accompanying person of the user on the basis of accompanying person recognition information for recognizing the accompanying person; and

a GNSS positioning decision unit configured to determine whether a GNSS positioning right for GNSS positioning is provided to a first information processing device or a second information processing device, the first information processing device being possessed by the user, the second information processing device being possessed by the accompanying person.

(22) The information processing device according to (21), in which

the accompanying person recognition information includes any one or a combination of a feature value indicating an interaction between the user and the accompanying person, or image information captured by the first information processing device possessed by the user, or information on a distance between the first information processing device and the second information processing device, or terminal identification information sent by the first information processing device or the second information processing device.

(23) The information processing device according to (21) or (22), in which

remaining battery levels of the first information processing device and the second information processing device are recognized, and an information processing device to which the GNSS positioning right is provided is decided on the basis of the remaining battery levels.

(24) The information processing device according to any one of (21) to (23), in which

in a case where a vehicle that is adjacent to the first information processing device and is capable of GNSS positioning is recognized, positioning information is acquired from the vehicle.

(25) The information processing device according to any one of (21) to (24), further including:

a communication unit, in which

a frequency at which GNSS positioning is intermittently performed is changed in accordance with a number of adjacent terminals recognized by the communication unit.

Reference Signs List

10    system

11    sensing unit

12    action detection unit

13    candidate selection unit

| 14 | feature value extraction unit |
| 15 | conversation determination unit |
| 16 | score calculation unit |
| 17 | grouping unit |
| 38, 40 | accompanying person recognition unit |
| 39 | GNSS positioning decision unit |
| 100a | eyewear |
| 100b | wristwear |
| 200 | mobile terminal |
| 300 | server |

**Claims**

1. An information processing device comprising:

   a communication determination unit configured to determine, on the basis of a feature value extracted from speech data including at least a sound of speech of a user, whether communication occurs between users including the user, the feature value indicating an interaction between the users.

2. The information processing device according to claim 1, wherein
   the users include a first user and a second user, and
   the feature value is extracted on the basis of a temporal relationship between a sound of speech of the first user and a sound of speech of the second user which are included in the speech data.

3. The information processing device according to claim 2, wherein
   the speech data includes first speech data including the sound of speech of the first user, and second speech data including the sound of speech of the second user.

4. The information processing device according to claim 2, wherein
   the speech data includes a single piece of speech data including the sound of speech of the first user, and the sound of speech of the second user.

5. The information processing device according to claim 1, further comprising:

   a feature value extraction unit configured to extract the feature value from the speech data.

6. The information processing device according to claim 1, wherein
   the communication determination unit determines whether the communication occurs between users selected from the users on the basis of a positional relationship between the users.

7. The information processing device according to claim 1, wherein the communication determination unit determines whether the communication occurs between users selected from the users on the basis of behavior information of each user.

8. The information processing device according to claim 1, wherein
   the feature value is extracted further from sensor data indicating motions or biological indicators of the users.

9. The information processing device according to claim 8, wherein

the users include a third user and a fourth user, and
the feature value is extracted on the basis of a relationship between a sound of speech of the third user included in the speech data, and a motion or a biological indicator of the fourth user indicated by the sensor data.

**10.** The information processing device according to claim 1, further comprising:

a display control unit configured to display a screen for presenting the communication in a chronological order.

**11.** The information processing device according to claim 10, wherein
the communication is presented in the screen in a form corresponding to occurrence probability of the communication calculated on the basis of the feature value.

**12.** The information processing device according to claim 1, further comprising:

a log output unit configured to output, on the basis of an occurrence history of the communication, a log including at least one of information of a person with whom at least one user included in the users communicates, or information of a conversation with the person with whom the at least one user included in the users communicates.

**13.** The information processing device according to claim 12, wherein
the log output unit outputs the log onto a time line presented to the at least one user.

**14.** The information processing device according to claim 1, further comprising:

a relationship graph specification unit configured to specify a graph structure expressing a relationship between the users on the basis of an occurrence history of the communication.

**15.** The information processing device according to claim 14, further comprising:

a sharing user specification unit configured to apply, in a phase in which at least one user included in the users shares information, a filter related to the shared information to the graph structure, thereby specifying another user who shares the information.

**16.** The information processing device according to claim 15, wherein
the filter is configured on the basis of a positional relationship with a user included in the graph structure, a group to which a user included in the graph structure belongs, an interest of a user included in the graph structure, behavior information of a user included in the graph structure, or knowledge of a user included in the graph structure.

**17.** The information processing device according to claim 14, wherein
the relationship graph specification unit temporarily corrects the graph structure specified on the basis of the occurrence history of the communication within a first period of time in accordance with a content of the communication occurring within a most recent second period of time that is shorter than the first period of time.

**18.** The information processing device according to claim 17, wherein
the users include a fifth user and a sixth user, and
in a case where a content sent by the fifth user includes a name of the sixth user in the communication occurring within the second period of time, the relationship graph specification unit temporarily strengthens a relationship between the fifth user and the sixth user in the graph structure.

**19.** An information processing method comprising, by a processor:

determining, on the basis of a feature value extracted from speech data including at least a sound of speech of a user, whether communication occurs between users including the user, the feature value indicating an interaction between the users.

**20.** A program for causing a computer to execute:

a function of determining, on the basis of a feature value extracted from speech data including at least a sound of speech of a user, whether communication occurs between users including the user, the feature value indicating an interaction between the users.

21. The information processing device according to claim 1, comprising:

an accompanying person recognition unit configured to recognize an accompanying person of the user on the basis of accompanying person recognition information for recognizing the accompanying person; and
a GNSS positioning decision unit configured to determine whether a GNSS positioning right for GNSS positioning is provided to a first information processing device or a second information processing device, the first information processing device being possessed by the user, the second information processing device being possessed by the accompanying person.

22. The information processing device according to claim 21, wherein
the accompanying person recognition information includes any one or a combination of a feature value indicating an interaction between the user and the accompanying person, or image information captured by the first information processing device possessed by the user, or information on a distance between the first information processing device and the second information processing device, or terminal identification information sent by the first information processing device or the second information processing device.

23. The information processing device according to claim 21, wherein
remaining battery levels of the first information processing device and the second information processing device are recognized, and an information processing device to which the GNSS positioning right is provided is decided on the basis of the remaining battery levels.

24. The information processing device according to claim 21, wherein
in a case where a vehicle that is adjacent to the first information processing device and is capable of GNSS positioning is recognized, positioning information is acquired from the vehicle.

25. The information processing device according to claim 21, further comprising:

a communication unit, wherein
a frequency at which GNSS positioning is intermittently performed is changed in accordance with a number of adjacent terminals recognized by the communication unit.

**FIG. 1**

ANOTHER USER

CANDIDATE USER

TARGET USER

(a)　　　　　　　　　　　(b)　　　　　　　　　　　(c)

FIG. 2

# FIG. 3

<u>10</u>

INPUT

SENSING UNIT ~11

12

ACTION DETECTION
UNIT

13

CANDIDATE
SELECTION UNIT

~14

FEATURE VALUE
EXTRACTION UNIT

CONVERSATION
DETERMINATION UNIT ~15

SCORE CALCULATION
UNIT ~16

GROUPING UNIT ~17

OUTPUT

# FIG. 4

WEARABLE TERMINAL ~100c

HEADSET

112 → MICROPHONE

110

120

SENSOR

122~ GYRO SENSOR

124~ ACCELERATION SENSOR

ENERGY

START    END

SPEECH SECTION

FREQUENCY

DISTRIBUTED

NOD

# FIG. 5

CONVERSING

NOT CONVERSING

OCCURRENCE
PROBABILITY

5s

TIME t

# FIG. 6

# FIG. 7

# FIG. 8

# FIG. 9

# FIG. 10

MICROPHONE ~112

MOTION SENSOR ~120

GEOMAGNETISM ~126

BIOLOGICAL SENSOR ~128

NOD ~130

SPEECH SECTION ~132

SPEECH CONTENT ~134

BODY DIRECTION ~136

GESTURE ~138

PULSE ~140

CONVERSATION FEATURE VALUE ~142

## FIG. 11

**FIG. 12**

**FIG. 13**

# FIG. 14

200

WITH

B

C

SWIPE

D

210

2100c

**FIG. 15**

# FIG.16

200    2101

◀ 2015/2/16 ▶

2103

Alice Brown
02:15:00

2105

Chris Diaz
00:11:00

Eleanor Fox
00:01:00

210

2100d

200

Alice Brown
02:15:00

2103

2105

2107

2015/2/16

02:15:00
▶ About Investment

2111

2109

2015/2/13

04:23:00
▷ John's party

210

2100e

# FIG. 17

~100w

~11

~31

~13

CANDIDATE SELECTION
UNIT

SENSING
UNIT

~12

ACTION
DETECTION UNIT

~14

COMMUNICATION
UNIT

~36

FEATURE VALUE
EXTRACTION UNIT

~15

POST-
PROCESS
UNIT

CONVERSATION
ESTIMATION UNIT

~175

LOG OUTPUT UNIT

**FIG. 18**

# FIG. 19

C SHOULD HAVE COME, TOO

G3

G4

FIG. 20

# FIG.21

200

GROUP

| NAME | GPS |
|------|-----|
| MS. AAA | ☐ |
| MS. BBB | ☑ |
| MR. CCC | ☐ |

210

**FIG.22**

**FIG. 23**

# FIG. 24

# FIG. 25

```
                    ┌──────────────┐
                    │    START     │
                    └──────┬───────┘
                           │
        ┌──────────────────▼─────────────────┐
┌───────┤                                    │
│       │   SCAN ADJACENT TERMINALS          │──── S100
│       │                                    │
│       └──────────────────┬─────────────────┘
│                          │
│       ┌──────────────────▼─────────────────┐
│       │   DETERMINE NUMBER OF ADJACENT      │──── S102
│       │   TERMINALS                         │
│       └──────────────────┬─────────────────┘
│                          │
│       ┌──────────────────▼─────────────────┐
│       │   PERFORM INTERMITTENT POSITIONING  │──── S106
│       │   BASED ON DETERMINED NUMBER OF      │
│       │   TERMINALS                         │
│       └──────────────────┬─────────────────┘
│                          │
│                     ╱────▼────╲   S108
│                   ╱  RECEIVE    ╲
│          ╱─── POSITIONING INFORMATION FROM ───╲  NO
│         ╱        ANOTHER TERMINAL?              ╲────────┐
│          ╲                                     ╱         │
│            ╲─────────────┬─────────────────╲ ╱           │
│                          │ YES                            │
│                          │        S110            S112    │
│       ┌──────────────────▼─────────┐   ┌─────────────────▼──────────┐
│       │   USE RECEIVED POSITIONING  │   │  PERFORM GNSS POSITIONING  │
│       │   INFORMATION               │   │  BY OWN TERMINAL           │
│       └──────────────────┬─────────┘   └─────────────────┬──────────┘
│                          │                               │
└──────────────────────────┴───────────────────────────────┘
```

**FIG.26**

## INTERNATIONAL SEARCH REPORT

| | International application No. |
|---|---|
| | PCT/JP2016/057392 |

**A. CLASSIFICATION OF SUBJECT MATTER**
*G10L25/51*(2013.01)i, *G06Q50/10*(2012.01)i

According to International Patent Classification (IPC) or to both national classification and IPC

**B. FIELDS SEARCHED**

Minimum documentation searched (classification system followed by classification symbols)
G10L25/51, G06Q50/10

Documentation searched other than minimum documentation to the extent that such documents are included in the fields searched
Jitsuyo Shinan Koho        1922-1996   Jitsuyo Shinan Toroku Koho   1996-2016
Kokai Jitsuyo Shinan Koho   1971-2016   Toroku Jitsuyo Shinan Koho   1994-2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | WO 2007/105436 A1 (Matsushita Electric Industrial Co., Ltd.), 20 September 2007 (20.09.2007), paragraphs [0043] to [0051], [0066] to [0069]; fig. 13, 14<br>& US 8581700 B2<br>column 10, line 40 to column 12, line 59; column 18, line 64 to column 19, line 47<br>& JP 4669041 B2        & CN 101390380 A | 1-7,19,20<br>8-16<br>17,18 |
| Y | JP 2003-228449 A (Sharp Corp.), 15 August 2003 (15.08.2003), paragraph [0035]<br>(Family: none) | 8,9 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 May 2016 (18.05.16) | 31 May 2016 (31.05.16) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**INTERNATIONAL SEARCH REPORT**

International application No.

PCT/JP2016/057392

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2013-58221 A (Hitachi, Ltd.), 28 March 2013 (28.03.2013), paragraph [0018]; fig. 1 (Family: none) | 10,11 |
| Y | Masayuki OKAMOTO et al., "Adhoc-Meeting Detection by Cross Correlation of Terminal Voice", The Institute of Electronics, Information and Communication Engineers Dai 19 Kai Proceedings of Data Engineering Workshop, 07 April 2008 (07.04.2008), pages 1 to 8, DEWS2008 D6-4 | 12,13 |
| Y | JP 2012-133735 A (KDDI Corp.), 12 July 2012 (12.07.2012), paragraphs [0002], [0027] to [0036] (Family: none) | 14-16 |
| Y | JP 2012-530321 A (Facebook, Inc.), 29 November 2012 (29.11.2012), paragraphs [0004] to [0006], [0021] to [0023]; fig. 1 & US 2010/0318571 A1 paragraphs [0004] to [0006], [0021] to [0023]; fig. 1 & JP 2015-201212 A    & US 2013/0019319 A1 & US 2015/0082462 A1   & WO 2010/147828 A1 & CA 2761348 A1        & CN 102460502 A & AU 2014203777 A1 | 15,16 |
| A | JP 2013-140534 A (Fuji Xerox Co., Ltd.), 18 July 2013 (18.07.2013), entire text; all drawings (Family: none) | 1-20 |
| A | JP 2013-164468 A (Fuji Xerox Co., Ltd.), 22 August 2013 (22.08.2013), entire text; all drawings (Family: none) | 1-20 |
| A | JP 2008-242318 A (Toshiba Corp.), 09 October 2008 (09.10.2008), entire text; all drawings & US 2008/0243494 A1 the whole document | 1-20 |

Form PCT/ISA/210 (continuation of second sheet) (January 2015)

## INTERNATIONAL SEARCH REPORT

| International application No. |
| --- |
| PCT/JP2016/057392 |

**Box No. II     Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III     Observations where unity of invention is lacking (Continuation of item 3 of first sheet)**

This International Searching Authority found multiple inventions in this international application, as follows:
  See extra sheet.

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:
   1-20

**Remark on Protest**         ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

**INTERNATIONAL SEARCH REPORT**

International application No.

PCT/JP2016/057392

Continuation of Box No.III of continuation of first sheet(2)

(Invention 1) claims 1-20
Disclosed in Document [WO 2007/105436 A1 (Matsushita Electric Industrial Co., Ltd.), 20 September 2007 (20.09.2007), paragraphs [0043] to [0051], [0066] to [0069]; fig. 13, 14] is that in detecting a same conversation group, terminals are determined to belong to the same conversation group when an utterance interval exists in both the terminals and the overlapping rate of the respective utterance intervals lies within 5 percent, the terminals having been selected on the basis of the distance between the terminals (corresponding to "the positional relation") or whether both the terminals are moving in the same direction (corresponding to "the behavioral information.")
Claims 1, 2 have no special technical feature, since said claims lack novelty in the light of the document 1.
However, claim 3 that is dependent on claim 1 has a special technical feature, i.e., that [the speech data includes the single speech data that includes an uttered speech of the first user and an uttered speech of the second user.]
Consequently, claims 1-3 are classified into Invention 1.
Further, claims 4-20 are classified into Invention 1 from the viewpoint of efficiency of examination.
(Invention 2) claims 21-25
It is not considered that claims 21-25 have a technical feature which is same as or corresponding to claim 3 classified into Invention 1.
Furthermore, although claims 21 to 25 are dependent on claim 1 classified into Invention 1, [the accompany recognition unit] and [the GNSS positioning determination unit], which are technical features added to claim 1, are not related to whether there has occurred a communication between users and have little technical relevance to a technical feature of claim 1 of [determining whether there has occurred a communication between the plurality of users.]
Therefore, it is not considered that claims 21-25 has an inventive relationship with claim 1.
Further, claims 21-25 have no relationship such that these claims are substantially same as or equivalent to any claim classified into Invention 1.
Consequently, claims 21-25 cannot be classified into Invention 1.
Then, claims 21 to 25 are classified into Invention 2 because the claims have the special technical features, i.e., [the accompany recognition unit] and [the GNSS positioning determination unit].

Form PCT/ISA/210 (extra sheet) (January 2015)

**EP 3 276 622 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012155374 A